# EUROPEAN PATENT APPLICATION

(11) **EP 2 897 033 A1**
(43) Date of publication of application: **22.07.2015**
(21) Application number: 15151320.7
(22) Date of filing: 15.01.2015
(51) Int. Cl.: G06F 3/0484, G06F 3/0486

(54) **Method for processing data and electronic device thereof**

(30) Priority: 15.01.2014 KR 20140005132
(71) Applicant: Samsung Electronics Co., Ltd, Gyeonggi-do 443-742 (KR)
(72) Inventor: Song, Se-Jun, Seoul (KR); Lee, Jung-Woo, Gyeonggi-do (KR); Jang, Keum-Ju, Seoul (KR); Choi, Young-Keun, Gyeonggi-do (KR); Hwang, Hyung-Suk, Gyeonggi-do (KR)
(74) Representative: Jenkins, Richard Gavin

(57) **Abstract**

Provided is a method for processing data in an electronic device. The method includes providing a first program through a display functionally connected to the electronic device. The method also includes acquiring a first input for selecting at least a portion associated with the first program. The method further includes acquiring a second input for transferring information corresponding to the selected portion associated with the first program based on the first input. The method includes determining a second program which receives the information corresponding to the selected portion based on predetermined information based on the second input. The method also includes displaying the information corresponding to the selected portion associated with the second program based on the determination.

## Description

### TECHNICAL FIELD

Various embodiments of the present disclosure relates to a method for processing data and electronic device thereof.

### BACKGROUND

With the development of mobile communication technology, electronic devices are used as personal communication devices. Furthermore, as the electronic device provides various additional functions, such as a camera function, a data communication function, a video play function, an audio play function, a messenger function, a schedule management function, and an alarm function, in addition to voice communication function, various programs for performing the functions are used in the electronic device and an input operation to the electronic device may be performed through various input methods or various objects.

The electronic device receives a gesture through one or more input tools. The gesture which is input to the electronic device through the one or more input tools enables a program to be executed and display a display interface or change display of the interface.

In order to move at least a portion of displayed information between programs in an electronic device, it is required to determine a selection region of information to be moved from a program and search for a program into which the selection region is to be pasted, thereby causing inconvenience to a user.

### SUMMARY

To address the above-discussed deficiencies, it is a primary object to provide a method and electronic device for displaying a program associated with selection information (region) through a predetermined gesture.

In a first embodiment, a method for processing data in an electronic device is provided. The method includes providing a first program through a display functionally connected to the electronic device. The method also includes acquiring a first input for selecting at least a portion associated with the first program. The method further includes acquiring a second input for transferring information corresponding to at least the portion, based on the first input. The method includes determining a second program which receives the information corresponding to at least the portion based on predetermined information, based on the second input. The method also includes displaying information corresponding to at least the portion on the second program based on the determination.

In a second embodiment, an electronic device is provided. The electronic device includes a display functionally connected to the electronic device. The electronic device also include at least one processor. The at least one processing is configured to manage data processing. The electronic device is configured to provide a first program through the display. The electronic device is also configured to acquire a first input for selecting at least a portion associated with the first program. The electronic device is further configured to acquire a second input for transferring information corresponding to the at least a portion, based on the first input. The electronic device is configured to determine a second program which receives the information corresponding to the at least a portion based on predetermined information, based on the second input. The electronic device is also configured to display information corresponding to the at least a portion on the second program based on the determination.

In a third embodiment, a non-transient computer readable storage medium storing one or more programs including instructions that, when executed, causes at least one processor to designate a text data region or an image data region displayed on a touchscreen. The non-transient computer readable storage medium storing one or more programs including instructions that, when executed, also causes at least one processor to detect a touch on the region and a drag having a distance equal to or longer than a predetermined distance. The non-transient computer readable storage medium storing one or more programs including instructions that, when executed, further causes at least one processor to display a word processing program or an image processing program associated with the text data or the image data. The non-transient computer readable storage medium storing one or more programs including instructions that, when executed, causes at least one processor to paste the text data or the image data into the word processing program or the image processing program which is displayed, in an electronic device.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates a block configuration of an example electronic device according to this disclosure;
FIGS. 2A, 2B, 2C, and 2D illustrate an example operation for transferring information of an object in an electronic device according to this disclosure;
FIGS. 3A, 3B, 3C, 3D, 3E, 3F, 3G, 3H, and 3I illustrate example operations for moving selected data in an electronic device according to this disclosure;
FIGS. 4A, 4B, 4C, 4D, and 4E illustrate example operations for moving selected data in an electronic device according to this disclosure;
FIGS. 5A, 5B, 5C, and 5D illustrate example operations for moving selected data in an electronic device according to this disclosure;
FIGS. 6A and 6B illustrate example operations for moving selected data in an electronic device according to this disclosure;
FIGS. 7A, 7B, 7C, 7D, and 7E illustrate example operations for moving selected data in an electronic device according to this disclosure;
FIGS. 8A, 7B and 8C illustrate example flowcharts of operations for moving selected data in an electronic device according to this disclosure; and
FIG. 9 illustrates an example block diagram of hardware according to this disclosure.

### DETAILED DESCRIPTION

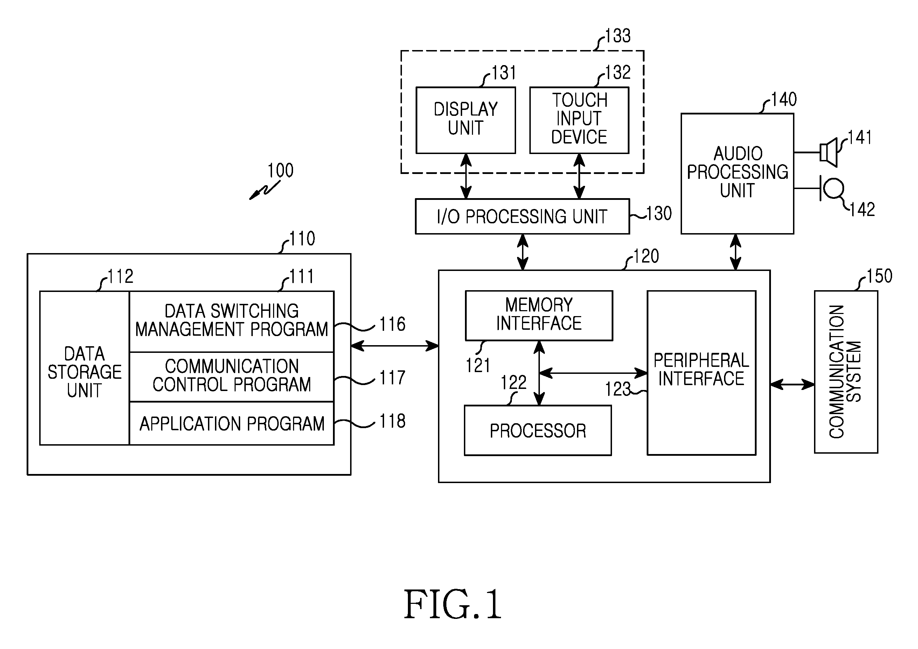

FIGURES 1 through 8C, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic device. The present disclosure provides a method and electronic device for selecting (a second object) a partial or entire portion of a first object displayed on a touchscreen through a first program, receiving a gesture (hereinafter, referred to as a switching gesture) for switching between programs through the touchscreen, switching from a first program displayed on the touchscreen to a second program according to the input switching gesture, and displaying the second object on a certain region of the second program.

Exemplary embodiments of the present disclosure will be described herein below with reference to the accompanying drawings. While various embodiments of the present disclosure is susceptible to various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, or equivalents and alternatives falling within the spirit and scope of the present disclosure. In the drawings, similar reference numerals denote similar elements.

The terms such as "includes" and "may include" when used herein, specify the presence of stated features, operations, or elements, but do not limit one or more additional functions, operations or elements. It will be understood that terms such as "comprise", "include", and "have", when used herein, specify the presence of stated features, integers, steps, operations, elements, components, or combinations thereof, but do not preclude the presence or addition of one or more other features, integers, steps, operations, elements, components, or combinations thereof.

The term "or" as used herein is to be interpreted as an inclusive or meaning any one or any combination. For example, "A or B" may be intended to include A, to include B, or to include both A and B."

Although terms such as "first" and "second" may be used herein to describe various elements, these elements should not be limited by these terms. For example, the terms do not limit the order or importance of the elements. These terms are only used to distinguish one element from another element. For example, a first user equipment and a second user equipment are both an user equipment and represent different user equipments. For example, a first element could be termed a second element, and, similarly, a second element could be termed a first element, without departing from the scope of the present disclosure.

It will be understood that when an element is referred to as being "connected" to another element, it may be directly connected to the other element or intervening elements may be present. In contrast, when an element is referred to as being "directly connected" to another element, there are no intervening elements present.

The terminology used in various embodiments of the present disclosure is for the purpose of describing particular embodiments only and is not intended to be limiting of the present disclosure. As used herein, the singular forms "a", "an", and "the" are intended to include the plural forms as well, unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined in embodiments of the present disclosure.

An electronic device according to various embodiments of the present disclosure can be a device having a communication function.

Examples of the electronic device include a smart phone, a tablet personal computer, a mobile phone, a video telephone, an e-book reader, a desktop personal computer, a laptop personal computer, a netbook computer, a personal digital assistant (PDA), a portable multimedia player, a MP3 player, a mobile medicine equipment, a camera, or a wearable device (for example, a head-mounted-device (HMD) such as an electronic glasses, an electronic clothing, an electronic bracelet, an electronic necklace, an electronic appcessory, an electronic tattoo, or a smart watch).

In some embodiments, an electronic device is a smart home appliance having a communication function. The smart home appliance, for example, the electronic device includes at least one of a television, a digital video desk (DVD) player, a stereo, a refrigerator, an air-conditioner, a cleaner, an oven, a microwave oven, a washing machine, an air cleaner, a set-top box, a TV box (for example, Samsung HomeSync^{™}, Apple TV^{™}, or Google TV^{™}), a game console, an electronic dictionary, an electronic key, a camcorder, or a digital photo frame.

According to an embodiment, the electronic device includes at least one of various types of medical equipments (for example, MRA (magnetic resonance angiography), MRI (magnetic resonance imaging), CT (computed tomography), an imaging device, or an ultrasound imaging device), a navigation device, a GPS receiver, an event data recorder (EDR), a flight data recorder (FDR), a vehicle infotainment device, a ship electronic equipment (for example, a ship navigation device or a gyrocompass device), an avionics device, a security equipment, and an industrial or home robot.

In some embodiments, the electronic device includes at least one of a furniture, a portion of a building/structure, an electronic board, an electronic signature receiving device, a projector, or various types of meters (for example, water, electricity, gas, or radio wave), each of which includes a communication function. The electronic device according to various embodiments of the present disclosure can be a combination of one or more of the above-described devices. It is obvious to those skilled in the art that the electronic device according to the present disclosure is not limited to the above-described devices.

The electronic device according to various embodiments will be described below with reference to accompanying drawings. The term "user" used herein may refer to a user which uses an electronic device or a device (for example, an artificial intelligence electronic device) which uses an electronic device.

FIG. 1 illustrates a block configuration of an example electronic device according to this disclosure. Referring to FIG. 1, the electronic device 100 includes a memory 110 and a processor unit 120. The electronic device includes, as peripheral devices, an input/output (I/O) processing unit 130, a display unit 131, a touch input device 132, an audio processing unit 140, a communication system 150, and other peripherals.

The memory unit 110 includes a program storage unit 111 for storing a program for controlling an operation of the electronic device 100 and a data storage unit 112 for storing data generated during the execution of a program, and stores data generated by an operation of a processor 122 in a program.

The data storage unit 112 stores a database which is configured in the form of a table or list by using information about operations for controlling another electronic device in the electronic device 100.

According to various embodiments, when at least a portion of an object displayed on the touchscreen 133 is selected, the data storage unit 112 stores data corresponding to the selection region (hereinafter referred to as a "selection region") of the object. The data corresponding to the selected object which is stored in the electronic device 100 can be data that is temporarily stored or data that is stored until a delete command is performed.

According to various embodiments, the data storage unit 112 stores a database for determining a program associated with the selection region. The database provides condition information for determining a program according to predetermined information, or stores and provides condition information which is input additionally upon setting.

According to various embodiments, the data storage unit 112 stores information about a determined program associated with the selection region according to the condition information provided from the database.

The program storage unit 111 includes a data switching management program 116, a communication control program 117, and at least one application program. Each of the programs stored in the program storage unit 111 are configured by a collection of instructions, and are expressed as an instruction set. The application program 118 includes a software component for at least one application program installed in the memory 110 of the electronic device 100.

The data switching management program 116 determines at least a portion of an object displayed on the touchscreen 133 as the selection region. The electronic device 100 provides a copy or cut operation in order to input the selection region to another program.

The data switching management program 116 detects an input of a predetermined switching gesture. When the input of the gesture is detected, an operation for providing information of the selection region (for example, location information or region information of the selected object) to another program can be performed.

The data switching management program 116 determines a list of programs which are associated with the selection region and displays the determined programs by using various methods corresponding to switching gestures. Various embodiments of the present disclosure are not limited to the method for displaying the programs, and information about the determined programs can be outputted by voice through a speaker. For example, switching between programs can be notified by a sound, such as a predetermined alert sound or an effect sound. A sentence for describing the switching can be outputted by voice. The names of the programs included in the list can be output by voice. In addition, the property of the object on the selection region can be output by voice. An alert voice can be output when the process is not performed.

When a program to be switched is selected, the data switching management program 116 displays the selected program on the touchscreen 133 and pastes the selection region into a selected position associated with the program displayed on the touchscreen. The selection region is displayed on the touchscreen 133 or is outputted as audio information depending on the type of data.

The communication control program 117 includes at least one software element for controlling communication with at least one other electronic device using the communication system 150 or the short-range wireless communication system 160.

The communication control program 117 searches for other electronic devices for communication connection. When the other electronic device for communication connection is found, the communication control program 117 sets up a connection for communication with the other electronic device. Thereafter, the communication control program 117 investigates the performance of the other electronic device connected to the electronic device and performs a session establishment process to enable the communication system 150 to transmit and receive data (for example, packet data) to and from the other electronic device.

One or more memory units 110 can be included in the electronic device 100. According to an embodiment, the memory 110 functions as the program storage unit 111 or the data storage unit 112 only or functions as both the program storage unit 111 and the data storage unit 112. The memory 110 is configured such that the internal physical partitioning is not fixed, according to the characteristics of the electronic device.

The processor unit 120 includes a memory interface 121, at least one processor 122, and a peripheral interface 123. In this case, the memory interface 121, the at least one processor 122 and the peripheral interface 123 which are included in the processor unit 120 are integrated into at least one circuit or are implemented as separate elements.

The memory interface 121 controls access to the memory 100 of elements, such as the processor 122 or the peripheral interface 123.

The peripheral interface 123 controls connections of the input/output peripherals of the electronic device 100 to the processor 122 and the memory interface 121.

The processor 122 enables the electronic device 100 to provide various multimedia services by using at least one software program, performs display on the display unit 131 to enable a user to see the UI operation of the electronic device through the I/O processing unit 130, and enables the touch input device 132 to provide a service for receiving an instruction from the outside of the electronic device. The processor 122 performs control to execute at least one program stored in the memory 110 and provides a service corresponding to the program.

The I/O processing unit 130 provides an interface between an input/output device 133, such as the display unit 131 and the touch input device 132, and the peripheral interface 123.

The display unit 131 receives the state information of the electronic device 100, characters that are input from the outside, and an image, such as a moving image or a still image, from the processor unit 120, configure an UI operation, and display the same through the input/output control unit 131.

The touch input device 132 provides input data generated by a user's selection to the processor unit 120 through the I/O processing unit 130. According to an embodiment, the touch input device 132 is configured by only a control button or a keypad in order to receive control data from the outside of the electronic device 100.

The touch input device 132 is provided as the input/output device 133 along with the display unit 131 such that input and output are executed on one screen. In this case, the touch input device 132 for use in the input/output device 133 uses one or more of a capacitive method, a resistive (pressure sensitive) method, an infrared method, an electromagnetic induction method, and an ultrasonic method.

A method for performing input on the touch input device 132 includes a method for inputting a command when an input tool is located within a predetermined distance from the touchscreen 133, a hovering touch, a floating touch, an indirect touch, a proximity touch or a non-contact input in addition to a method for performing input through a direct touch on the touchscreen 133.

The input/output device 133 is a device in which the touch input device 132 is physically combined with the display 131 on one screen and is a touchscreen configured such that a command is input by touching a screen configuration displayed on the display unit 131 upon operation of the electronic device 100. Thus, the touchscreen 133 functions as both the display unit 131 for displaying a UI operation of the electronic device 100 and the input device 132 for inputting an external command to the electronic device 100. Therefore, in the following description, the display unit 131 and the input device 132 are referred to as the touchscreen 133. Various embodiments of the present disclosure will be described on the assumption that the touchscreen 133 is a complex touch panel in which a touch panel and a pen touch panel are implemented together. The touchscreen 133 of the electronic device 100 is not limited to the touchscreen configured by the complex touch panel, and can be applicable to a touchscreen including a pen touch panel on which a pen touch is only possible.

The audio processing unit 140 provides an audio interface between a user and the electronic device 100 through a speaker 141 and a microphone 142.

The communication system 150 performs a communication function. The communication system 150 performs communication with other electronic devices by using one or more of mobile communication using a base station, wired communication, and satellite communication and be connected to the short-range wireless communication module 160 to perform short-range wireless communication.

The short-range wireless communication module 160 performs communication with other electronic devices by using at least one of short-range communication, such as infrared transmission, Bluetooth communication, Bluetooth Low Energy (BLE) communication, Wireless Fidelity (Wi-Fi) communication, Near Field Communication (NFC) wireless communication, Zigbee communication, or Ultra-wideBand (UWB) communication, wireless LAN communication, and wired communication.

Although the communication system 150 or the short-range communication module 160 are described as being provided separately from each other, the communication system 150 and the short-range communication module 160 can be integrated into one communication system module. In various embodiments of the present disclosure, the short-range wireless communication module can be described separately from an infrared communication module.

Although not illustrated, one or more programs or one or more elements of the electronic device 100 can be executed by one or more control modules controlled by the processor 122.

In the following description of the present disclosure, display of the electronic device 100 or output of the electronic device 100 are terms representing a method for displaying a moving image, a still image, or a GUI operation or a method for outputting a signal sound or a voice through the speaker 141. In the following description, the term "display" or "output" are used as described above. If needed, the term can be indicated differently.

In various embodiments of the present disclosure, the electronic device 100 functions as one or more other electronic devices (for example, a first electronic device, a second electronic device, or a third electronic device). According to various embodiments, one or more other electronic devices (for example, the first electronic device, the second electronic device, or the third electronic device) can be identical or similar to the electronic device 100 or be configured by including a portion of the electronic device 100.

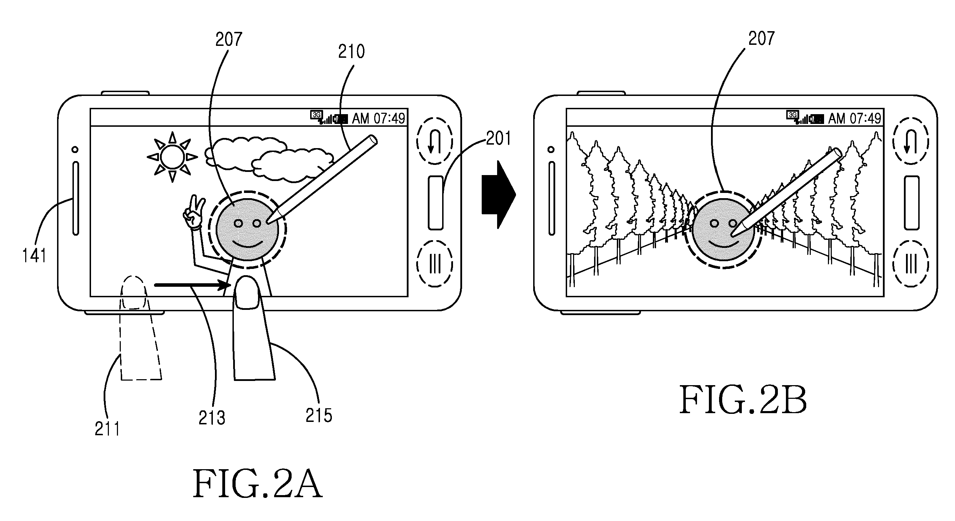

FIGS. 2A and 2B illustrate an example operation for transferring information of an object in an electronic device according to this disclosure.

According to various embodiments, the electronic device 10 receives an input using one or more input tools on a touchscreen and identify a preset input tool when an input using an input tool is received on the touchscreen. The input tool is a part of a body for making an input by touching the touchscreen 133 directly or indirectly, a touch pen, or an input tool for making an input by changing capacitance in a case where the touch screen 133 is a capacitive touchscreen. The input tool is not limited to the above-described input tools, and can include one or more of various types of input tools for making an input on the touchscreen 133.

A first input tool 210 is an identifiable input tool which is previously set in the electronic device 100. The electronic device 100 includes a separate input device for detecting an input of the first input tool 210 in the touchscreen, in addition to the touch input device 132. An example of the first input tool 210 can include an electronic pen.

A second input tool is an input tool for making an input to the touch input device 132 of the electronic device 100. The second input tool includes various types of input tools for making a touch input to the touch input device 133 included in the touchscreen 133, and an example thereof may be a finger.

Embodiments of the present disclosure will be described below with reference to FIGS. 2A and 2B.

According to various embodiments, the electronic device 100 selects a region corresponding to at least a portion of information (such as an object such as an icon, data, or an image) displayed on the touchscreen 133. The electronic device 100 copies a selection region which is selected from an object displayed on the touchscreen 133. The electronic device 100 pastes the selected object or the selected region into another program capable of processing data corresponding to the object that is selected and copied by selecting a designated region and copying the selection region (hereinafter, referred to as "select and copy") or corresponding to the selection region. According to an embodiment, the select and copy function of the electronic device 100 is a copy function that is generally used by various electronic devices. According to an embodiment, the select and copy function is not limited to a function for copying a selection object, and can be a function for cutting the selected object. In addition, the select and copy function can be interpreted as selecting and copying a region, not as copying only a portion of a whole. Therefore, the term "select and copy function" can be used to represent a function for copying an entire region as a selection region. The electronic device 100 stores the selected and copied object or the designated region in the memory 110 at a predetermined position or in a random access memory (RAM) of the electronic device, which is described as being in a selected and copied state.

The electronic device 100 determines the selection region 207 from image information displayed on the touchscreen through the first input tool 210. The electronic device 100 performs an operation for selecting and copying the determined selection region 207 through the first input tool 210. The operation for performing selection and copy through the first input tool 210 is an operation for touching the determined selection region 207 through the first input tool 210. The determined selection region 207 is data displayed on the touchscreen 133 of the electronic device or is data linked to the selection region 207 and is stored in the memory 110.

According to various embodiments, the electronic device 100 receives a predetermined switching gesture through the second input tool in the state where the selection region is selected and copied through the first input tool 210 and performs an operation corresponding to the received gesture. The predetermined gesture is an operation for touching (211) a certain region of the touchscreen 133, dragging (213) the region in a horizontal direction in a state where the touch is maintained, and releasing (215) the touch through the second input tool. According to various embodiments, an operation for detecting the predetermined switching gesture includes one or more of an operation for detecting a plurality of times of touch operations having a pattern, an operation for detecting a pinch-to-zoom operation, an operation for detecting an operation for tabbing a left or right portion of the electronic device 100, an operation for detecting the movement of an eye, an operation for detecting the movement of a user's head, an operation for detecting a proximity touch, an operation for detecting a gesture in space, and an operation for detecting an operation for scrolling a touch input device outside the electronic device 100, in addition to an operation for detecting the scrolling operation. According to an embodiment, the operation for performing selection and copy through the first input tool 210 is an operation for touching the selection region 207 and maintaining the touch through the first input tool 210.

The operation using a proximity touch will be described in various embodiments. The proximity touch can be implemented by a hovering input. The hovering input can refer to detection of a pointing object, such as a finger, a touch pen, or a stylus without a direct contact with a sensitive surface of the touchscreen 133. An operation for moving or scrolling the proximity touch right to left, left to right, up to down, or down to up can be determined as the predetermined gesture.

The operation using a gesture in space is input to the electronic device 100 through a camera of the electronic device 100. To this end, an operation of an input tool, such as a user's hand (including fingers) are detected by using the camera. The operation using a detected gesture in space is described in various embodiments and, for example, an operation for moving or scrolling the proximity touch right to left, left to right, up to down, or down to up can be determined as the predetermined gesture.

Referring to FIG. 2B, the electronic device 100 performs an operation corresponding to a switching gesture that is input through the second input tool. The electronic device 100 determines a list of one or more programs for performing an operation in connection with the selection region 207 which is selected and copied through the first input tool 210 as illustrated in FIG. 2A. The electronic device 100 switches from a program displayed on the touchscreen 133 to one program of the program list according to a scrolling operation through the second input tool which is received in the state where the selection region 207 is selected and copied through the first input tool 210. When the program displayed on the touchscreen 133 is switched to another program according to a predetermined gesture (for example, the scrolling operation) using an input tool, the selection region 207 which is selected and copied through the first input tool 210 is maintained in a state of being displayed.

According to various embodiments, the operation for determining a list of one or more programs is performed based on an input tool for determining a region corresponding to at least a portion of an object or a type of the object which is selected and copied. When a type of an object is media data (such as an image) and the object is selected and copied through the first input device 210, the electronic device 100 determines a program for displaying or editing the image preferentially as a relevant program. According to an embodiment, the program to which the electronic device has switched according to the scrolling operation can be an album program. When a type of an object is text, the electronic device 100 determines a program for editing the text preferentially. When a type of an object is a file, the electronic device 100 displays a program associated with the metadata of the file or at least a portion of information included in the metadata by using the metadata of the file. As to use of the metadata, an application program or a relevant application program which is set to be executed is identified by analyzing, for example, metadata of a file and the identified application program is preferentially displayed. When the form of an object is a text type corresponding a bank account number, a relevant application program associated with a bank, for example, a bank transfer program can be preferentially displayed.

According to various embodiments, the electronic device 100 pastes the selection region 207 into the program displayed on the touchscreen 133 by releasing a touch of the first input tool, which selects and copies the selection region 207. According to an embodiment, the electronic device 100 displays image data which the album program includes on the touchscreen 133 and pastes the selected and copied selection region 207 into a position which is touched before releasing of the touch of the first input tool. According to an embodiment, the electronic device 100 may not request an operation for maintaining the touch of the first input tool when the selection region is selected and copied. The electronic device 100 selects a position, into which the selection region is to be pasted, on the touchscreen 133 which displays image data, through the first input tool 210, and pastes the selection region 207 into the position selected through the first input tool 210 when a predetermined paste gesture is made.

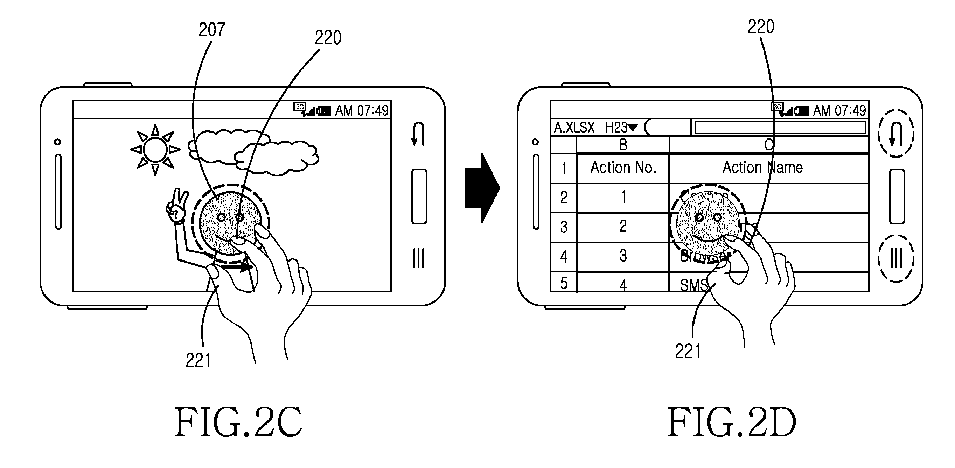

Embodiments of the present disclosure will be described below with reference to FIGS. 2C and 2D.

Referring to FIG. 2C, the electronic device 100 selects and copies a region corresponding to at least a portion of an object displayed on the touchscreen 133. The electronic device 100 determines the selection region 207 from image information displayed on the touchscreen through the second input tool 210. The electronic device 100 performs an operation for selecting and copying the selection region 207 which is determined through the second input tool 210. According to an embodiment, an operation for performing selection and copy using the second input tool is an operation for touching the determined selection region 207 using a second finger 220.

According to various embodiments, the electronic device 100 receives a predetermined switching gesture through the second input tool in the state where the selection region is selected and copied through a second finger 220 and performs an operation corresponding to the received gesture. The second input tool for inputting the predetermined gesture can be a first finger 221. The predetermined gesture can be an operation for scrolling a certain region of the touchscreen 133 in a horizontal direction using the first finger 221.

Referring to FIG. 2D, the electronic device 100 performs an operation corresponding to a switching gesture that is input through the first finger 221. The electronic device 100 determines a list of one or more programs for performing an operation in connection with the selection region 207 which is selected and copied through the second finger 220 in FIG. 2C. The electronic device 100 switches from a program displayed on the touchscreen 133 to one program of the program list according to a scrolling operation using the second finger 221 which is received in the state where the selection region 207 is selected and copied through the first finger 220. When the program displayed on the touchscreen 133 is switched to another program according to a predetermined gesture (such as the scrolling operation) using an input tool, the selection region 207 which is selected and copied through the first finger 220 is maintained in a state of being displayed.

According to various embodiments, the operation for determining a list of one or more programs is performed based on an input tool for determining a region corresponding to at least a portion of an object or a type of the object which is selected and copied. When a type of an object is media data (such as an image) and the object is selected and copied through the second input device, the electronic device 100 preferentially determines a program for attaching the image, which is included in a relevant list of programs. Referring to FIG. 2D, the program to which the electronic device has switched according to the scrolling operation can be a word processor program capable of attaching an image.

According to various embodiments, in order to determine a list of programs according to a selected and copied object, the electronic device 100 determines a program for displaying or editing an image preferentially as a relevant program when selection and copy are performed through the first input tool 210 and determines a program for attaching an image as a relevant program when selection and copy are performed through the second input tool. The present disclosure is not limited to the above configurations, a condition for determining a relevant program can be changed through settings.

According to various embodiments, the electronic device 100 pastes the selection region 207 into the program displayed on the touchscreen 133 by releasing a touch of the second finger 220, which selects and copies the selection region 207. According to an embodiment, the electronic device 100 displays a word processing region of a word processor program on the touchscreen 133 and pastes the selected and copied selection region 207 into a position which is touched immediately before releasing of the touch of the second finger 220. According to an embodiment, the electronic device 100 may not request an operation for maintaining the touch of the second finger 220 when the selection region is selected and copied. The electronic device 100 selects a position, into which the selection region 207 is to be pasted, on the touchscreen 133 which displays the word processing region, through the second finger 220, and pastes the selection region 207 into the position selected through the second finger 220 when a predetermined paste gesture is made.

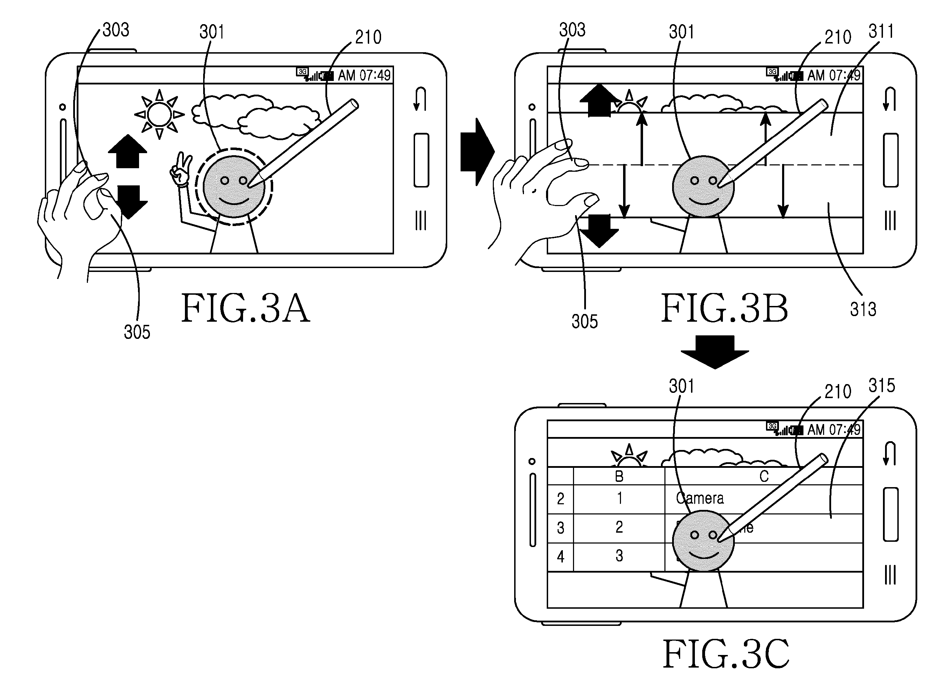

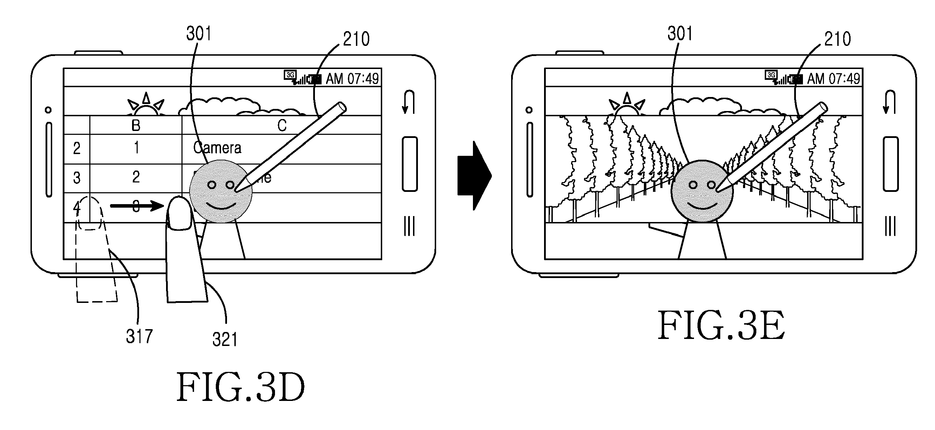

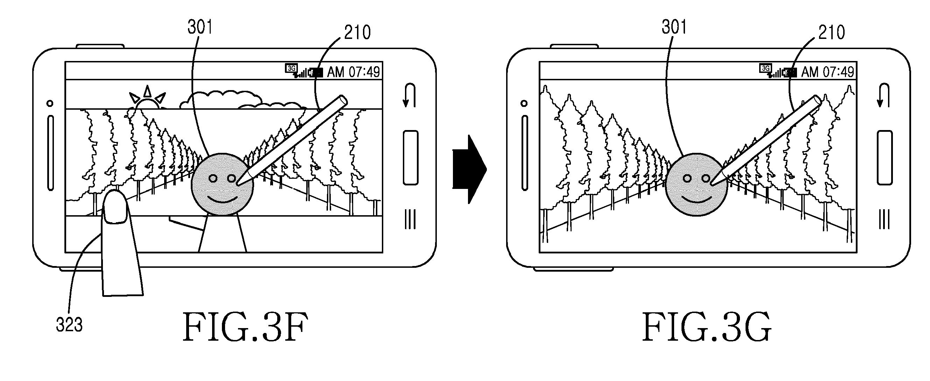

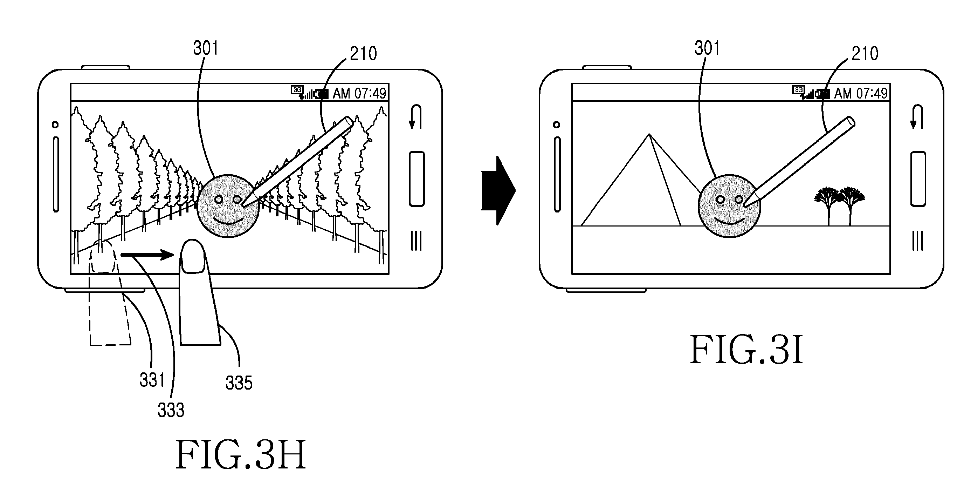

FIGS. 3A, 3B, 3C, 3D, 3E, 3F, 3G, 3H, and 3I illustrate example operations for moving selected data in an electronic device according to this disclosure.

The electronic device 100 provides various methods for switching from a displayed program to another program according to a switching gesture which is received in a state where a region corresponding to at least a portion of an object displayed on the touchscreen 133 is selected and copied.

Various embodiments of the present disclosure will be described below with reference to FIGS. 3A, 3B, 3C, and 3D.

Referring to FIG. 3A, the electronic device 100 selects and copies a region corresponding to at least a portion of an object displayed on the touchscreen 133. The electronic device 100 determines the selection region 301 from image information displayed on the touchscreen through the first input tool 210. The electronic device 100 performs an operation for selecting and copying the selection region 301 which is determined through the first input tool 210.

According to various embodiments, the electronic device 100 receives a predetermined switching gesture through the second input tool in the state where the selection region is selected and copied through the first input tool 210 and performs an operation corresponding to the received gesture. The predetermined gesture can be identical or similar to a pinch-to-zoom operation for touching (211) a certain region of the touchscreen 133 simultaneously using one or more second input tools, dragging (213) the region in a state of being touched, and releasing (215) the touch. The one or more second input tools can be determined to be a first finger 303 and a second finger 305, and makes an operation for zooming in by moving two fingers farther closer together.

Referring to FIG. 3B, the electronic device 100 performs an operation corresponding to a switching gesture that is input through the second input tool. The electronic device 100 determines a list of one or more programs for performing an operation in connection with the selection region 301 which is selected and copied through the first input tool 210 in FIG. 3A. The electronic device 100 switches from display of a specified region 311 or 313 of the touchscreen 133 to display of a region on which a list of programs or at least one program, which is determined in connection with the selection region 301, is displayed, according to the zoom-in operation of the second input tool which is input in a state where the selection region 301 is selected and copied through the first input tool 210. According to an embodiment, an animation effect in which the region is changed up and down from a centerline of the region can be applied to the region.

According to FIG. 3C, the electronic device 100 displays a list of programs determined based on the selection region 301 or one program having a relative high priority (such as a first priority) in connection with the selection region 301, on the selection region 301, according to a specified switching gesture of the second input tool. According to an embodiment, when one program is displayed (315) in connection with the selection region 301, the electronic device 100 defines elative priorities using one or more pieces of information of usage count, total usage time, most recently usage time point, reliabilities of providers of programs acquired through network communication, and recommendation (or recommendation count) of programs acquired through network communication of program information of the acquired list of programs, and display one program (such as a first priority of program).

When the program displayed on the touchscreen 133 is switched to another program according to a predetermined gesture (such as a zoom-in operation) using an input tool, the selection region 301 which is selected and copied through the first input tool 210 is maintained in a state of being displayed.

According to various embodiments, the operation for determining a list of one or more programs is performed based on an input tool for determining a region corresponding to at least a portion of an object or a type of the object which is selected and copied. When a type of an object is media data (such as a moving image) and the object is selected and copied through the first input device, the electronic device 100 determines a program for playing back or editing the moving image preferentially to be included in a relevant list of programs according to a program determination condition corresponding to the first input tool. According to an embodiment, the program displayed on the specified region 311 of the touchscreen 133 according to the zoom-in operation can be a word processor program for attaching the selection region 301.

Embodiments of the present disclosure will be described below with reference to FIGS. 3D and 3E.

According to various embodiments, the electronic device 100 receives a switching gesture through a certain region 311 of the touchscreen 133 which displays a relevant program in the state where the selection region 301 is selected and copied, and switch a displayed relevant program displayed according to a gesture.

Referring to FIG. 3D, the electronic device 100 selects and copies the selection region 201 through the first input tool 210 and receives a switching gesture through the certain region of the touchscreen 133 which displays the selection region 301 and the relevant program. According to an embodiment, the received gesture is an operation for touching (317) a certain region through the second input tool, dragging (319) the region in a horizontal direction in the state where the touch is maintained, and releasing (321) the touch.

Referring to FIG. 3E, the electronic device 100 switches from display of a program displayed on a certain region of the touchscreen 133 to display of another program according to the received switching gesture. The program to which the electronic device switches is a program having a priority one less than that of the program displayed on the certain region of the touchscreen 133 according to priorities of programs associated with the selection region 301. According to an embodiment, the program to which the electronic device switches is an album program corresponding to a priority one less than that of the word processing program as illustrated in FIG. 3C.

Embodiments of the present disclosure will be described below with reference to FIGS. 3F and 3G.

According to various embodiments, the electronic device 100 receives a switching gesture through a portion of the touchscreen 133 and expands a program displayed on a portion to be displayed on an entire region of the touchscreen 133 according to the gesture.

Referring to FIG. 3F, the electronic device 100 receives a gesture on the certain region 311 of the touchscreen 133. The gesture received through the certain region 311 can be a touch operation for selecting an object in the electronic device 100. The electronic device 100 detects a selection of the program displayed on the certain region 311 of the touchscreen 133 through a touch gesture.

Referring to FIG. 3G, the electronic device 100 performs an operation corresponding to a gesture detected from the certain region 311 of the touchscreen 133. The electronic device 100 detects the touch gesture 323 for selecting a program selected on the certain region 311 of the touchscreen 133. The electronic device 100 displays the program displayed on the certain region 311 of the touchscreen 133 to fill the entire region of the touchscreen 133 according to a touch gesture. The operation for displaying the selected program on the entire region of the touchscreen 133 is an operation for switching to displaying a program which is currently executed in the electronic device 100 on the entire region of the touchscreen 133. When an image of an album program displayed on the certain region 311 of the touchscreen 133 is selected, the electronic device 100 switches to displaying the album program on the entire region of the touchscreen 133, thereby scaling the image displayed on the certain region to fill the entire region of the touchscreen 133. The electronic device 100 displays the selection region 301, which is selected and copied before the switching, on the image displayed on the touchscreen 133. The selection region 301 displayed on the touchscreen 133 can be in a state of being selected and copied through the first input tool 210.

According to various embodiments, the electronic device 100 pastes the selection region 301 into the program displayed on the touchscreen 133 by releasing a touch of an input tool, which selects and copies the selection region 301. According to an embodiment, the electronic device 100 displays image data, which the album program includes, on the touchscreen 133 and paste the selection region 301 which is selected and copied, into a position which is touched before releasing of the touch of the input tool. According to an embodiment, the electronic device 100 may not request an operation for maintaining the touch of the input tool when the selection region is selected and copied. The electronic device 100 selects a position, into which the selection region 301 is to be pasted, on the touchscreen 133 which displays image data through the input tool, and pastes the selection region 301 into the position selected through the input tool when a predetermined paste gesture is made.

Embodiments of the present disclosure will be described below with reference to FIGS. 3H and 3I.

According to various embodiments, the electronic device 100 switches from display of an object to display of another object according to a switching gesture received on the touchscreen 133.

Referring to FIG. 3H, the electronic device 100 displays one or more objects associated with a program on the touchscreen 133. In a case of an album program, the electronic device 100 groups one or more images stored in the memory 110, configures a list of the one or more images which are grouped, and displays selected one or more images on the touchscreen 133.

The electronic device 100 receives a scrolling operation for touching (331) the touchscreen 133 on which an image is displayed, performs a drag operation (333) in a horizontal direction in a state where the touch is maintained, and releases the touch (335).

Referring to FIG. 3I, the electronic device 100 switches from display of data to display of other data according to a detected gesture. When a program displayed on the touchscreen 133 is an album program, the electronic device 100 displays one or more pieces of image data which are linked to the album program on the touchscreen 133. The electronic device 100 detects a scrolling gesture that is input on the touchscreen. The electronic device 100 displays previous image data or next image date of a list of one or more pieces of image data which are grouped on the touchscreen 133 according to the scrolling gesture.

According to various embodiments, the electronic device 100 pastes the selection region 301 into data displayed on the touchscreen 133 by detecting a predetermined paste operation using an input tool. The electronic device 100 pastes the selected region 301 into a position at which the first input tool 210 is released from a state of selecting and copying the selection region at the time of pasting the selected region 301 displayed on the touchscreen 133.

According to various embodiments, the electronic device 100 switches from display of a program to display of another program on the touchscreen 133 by receiving a predetermined operation, such as the pinch-to-zoom operation as described above with reference to FIGS. 3A, 3B, and 3C.

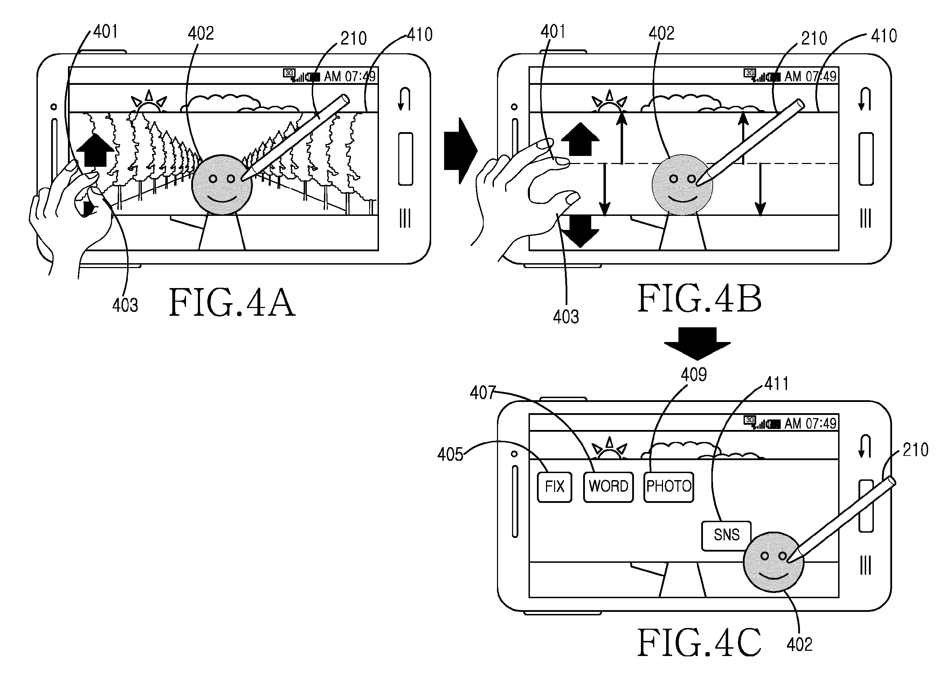

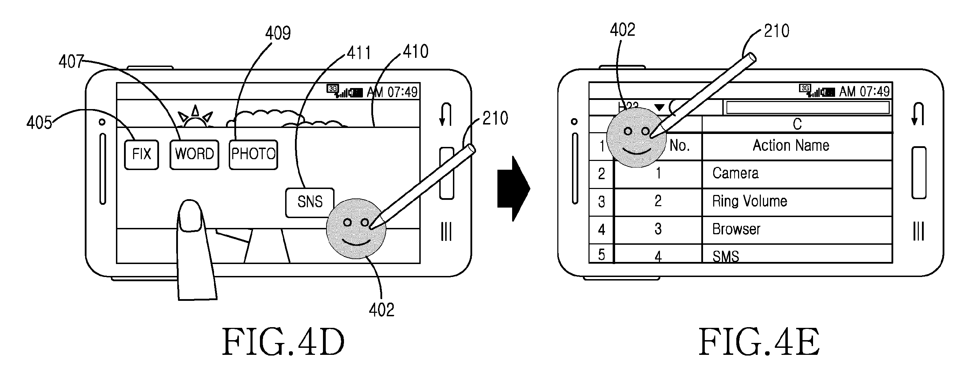

FIGS. 4A, 4B, 4C, 4D, and 4E illustrate example operations for moving selected data in an electronic device according to this disclosure.

The electronic device 100 provides various methods for switching from display of a program to display of another program according to a switching gesture which is received in a state where a region corresponding to at least a portion of an object displayed on the touchscreen 133 is selected and copied.

Various embodiments of the present disclosure will be described below with reference to FIG. 4A.

Referring to FIG. 4A, the electronic device 100 selects and copies a region (a selection region 402) corresponding to at least a portion of an object displayed on the touchscreen 133.

According to various embodiments, the electronic device 100 receives a gesture identical or similar to the pinch-to-zoom operation as described with reference to FIG. 3A using the second input tool in a state where the selection region 402 is selected and copied through the first input tool 210. According to an embodiment, an operation for zooming in by moving two fingers farther closer together using a first finger 401 and a second finger 403 is performed as the pinch-to-zoom operation.

According to various embodiments, the electronic device 100 detects a zoom-in operation again in a state where the zoom-in operation has been performed as illustrated in FIG. 3C and a program associated with the selection region has been displayed on a certain region 311 of the touchscreen 133.

Referring to FIG. 4B, the electronic device 100 performs an operation corresponding to a switching gesture that is input through the second input tool. The electronic device 100 determines a list of one or more programs for performing an operation in connection with the selection region 402 which is selected and copied through the first input tool 210. The electronic device 100 switches from one display state of a program to another display state of the program on a partial region 410 of the touchscreen 133, according to a zoom-in operation of the second input tool which is received in the state where the selection region 402 is selected and copied through the first input tool 210. The partial region 410 of the touchscreen 133 of the electronic device 100 can be a region identical to the certain region 311 described above with reference to FIGS. 3A, 3B, 3C, 3D, 3E, 3F, 3G, 3H, and 3I, and can be configured in a method identical or similar to a method for configuring the certain region 311. When the zoom-in operation of the second input tool is detected, the electronic device 100 displays an animation effect in which the region is changed up and down from a centerline of the region.

Referring to FIG. 4C, the electronic device 100 performs an operation corresponding to a predetermined switching gesture which is input through the second input tool in a state where a program associated with the selection region 402 is displayed on the certain region 331 of the touchscreen 133. The electronic device 100 displays a list of programs which is determined in connection with the selection region 402 on the certain region 402 of the touchscreen 133, according to the input gesture. Referring to FIG. 3C, the electronic device 100 displays icons linked to one or more programs included in the determined list of programs when the determined list of programs is displayed on the certain region 410 of the touchscreen 133. According to an embodiment, when the selection region 402 is image data, a relevant program includes an image editing program, a word processor program, an album program, and a social network service (SNS) program. The electronic device 100 displays an icon 405 linked to the image editing program, an icon 407 linked to the word processor program, an icon 409 linked to the album program, and an icon 411 linked to the SNS program when the programs are displayed on the certain region 410 of the touchscreen 133. According to various embodiments, the present disclosure is not limited to display of an icon linked to a program, and the electronic device 100 can display a list of programs which is made of text or output the list of programs by voice. When display of the program displayed on the touchscreen 133 is switched to display of another program according to a predetermined gesture (such as a zoom-in operation) using an input tool, the selection region 402 which is selected and copied through the first input tool 210 can be maintained in a state of being displayed.

Embodiments of the present disclosure will be described below with reference to FIGS. 4D and 4E.

According to various embodiments, the electronic device 100 selects a program from a list of programs which is displayed on a certain region 410 of the touchscreen 133 and paste the selection region 402, which is selected and copied, into the certain region of the touchscreen 133 which displays the selected program.

Referring to FIG. 4D, the electronic device 100 receives selection of a program displayed on the certain region 410 of the touchscreen 133. The electronic device 100 receives selection of a program displayed on the certain region 410 using a method identical or similar to a method for selecting an object displayed on the touchscreen. According to an embodiment, the electronic device 100 selects a program displayed on the certain region 401 through a touch.

Referring to FIG. 4E, the electronic device 100 displays a program selected from one or more programs displayed on the certain region 410 of the touchscreen 133 on the touchscreen 133. The electronic device 100 displays a selection region 402 which is selected and copied through the first input tool 210 on the touchscreen which displays the selected program. The electronic device 100 detects a position indicated by the first input tool on the touchscreen 133 and displays the selection region 402 at the detected position as illustrated in FIG. 4A, 4B and 4C or in FIGS. 4D and 4E.

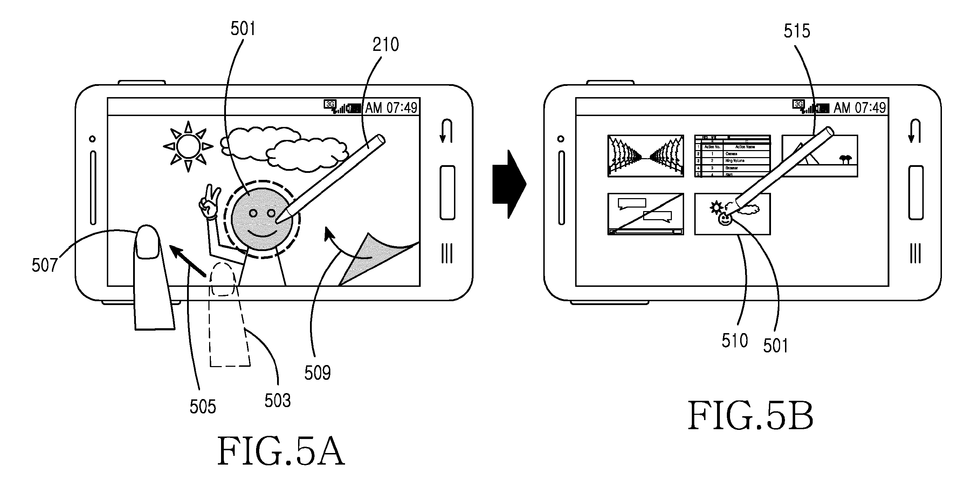

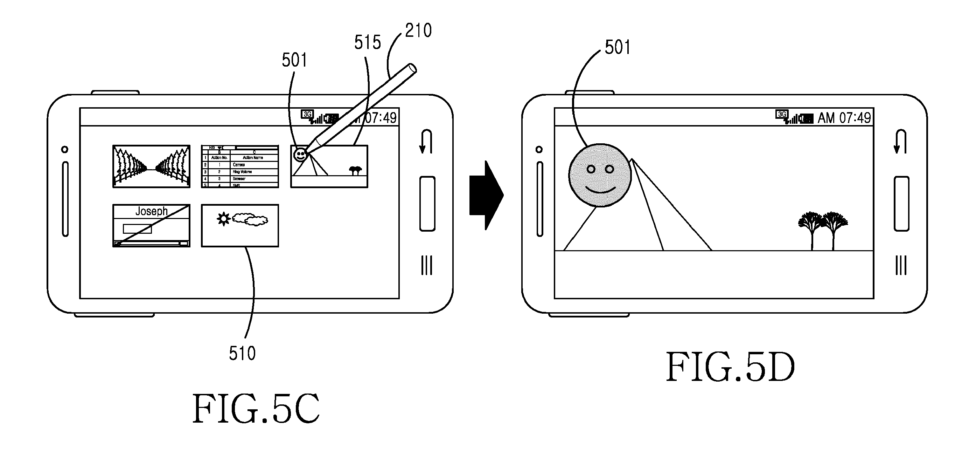

FIGS. 5A, 5B, 5C, and 5D illustrate example operations for moving selected data in an electronic device according to this disclosure.

The electronic device 100 selects and copies at least a portion of an object displayed on the touchscreen. The electronic device 100 receives a predetermined switching gesture and display a program associated with the selection region which is selected and copied, according to a gesture.

Referring to FIG. 5A, the electronic device 100 receives the predetermined switching gesture in a state where the selection region 501 is maintained as being indicated. According to an embodiment, the predetermined gesture is a gesture for performing a touch operation (503) using the second input tool, performing a drag operation (505) in a diagonal direction in a state where the touch is maintained, and releasing the touch (507), such as turning over a page. According to an embodiment, the electronic device 100 configures a list of programs which are associated with the selection region 501 and performs an operation for displaying the configured list of programs. The electronic device 100 displays an animation effect 509 of turning a page of an electronic book in order to display the list of programs.

Referring to FIG. 5B, the electronic device 100 performs an operation corresponding to an input operation when the predetermined switching gesture is detected. When detecting the gesture for turning a page as illustrated in FIG. 5A, the electronic device 100 displays a program associated with the selection region 501 which is selected and copied on the touchscreen 133. The electronic device 100 displays a thumbnail image of the relevant program.

According to an embodiment, the thumbnail image displayed on the touchscreen 133 of the electronic device can be a thumbnail image 510 of a program which is displayed on the touchscreen 133 before the input of a gesture for turning the page. The selection region 501 which is selected and copied can be displayed on the thumbnail image 510.

According to various embodiments, the electronic device 100 displays a program which is not included in a memory of the electronic device 100 when the relevant programs are displayed. The electronic device 100 displays a thumbnail image of an SNS program which is not included in the memory 110. The electronic device 100 acquires a relevant program associated with the selection region 501, which is not stored in the memory 110, by using information about programs which are received by other electronic devices to which the electronic device 100 is connectable through an address book of the electronic device 100, Internet, or information included in one or more of SNS programs included in the memory 110.

Embodiments of the present disclosure will be described below with reference to FIGS. 5C and 5D.

According to various embodiments, the electronic device 100 selects a thumbnail displayed on the touchscreen 133 and pastes the selection region 501, which is selected and copied, into the thumbnail.

Referring to FIG. 5D, the electronic device 100 displays thumbnail images of relevant programs associated with the selection region 501 on the touchscreen 133. The electronic device 100 moves the selection region 501 from the thumbnail image 510, from which the selection region 510 is acquired, through the first input tool 210. A program into which the selection region 501 is to be pasted is determined through the thumbnail images displayed on the touchscreen 133. According to an embodiment, the electronic device 100 selects a position, at which the selection region 501 is to be pasted, on the thumbnail image 515 through the input tool which has performed selection and copies and performs a paste operation.

Referring to FIG. 5D, the electronic device 100 determines a program into which the selection region 501 is to be pasted through one or more thumbnail images displayed on the touchscreen 133 and switches to displaying the determined program on the touchscreen 133. When the selected thumbnail image is the thumbnail image 151 linked to an album program, the electronic device 100 switches from displaying image data of the thumbnail image to displaying the image data to fill the touchscreen 133 in the album program. The electronic device 100 identifies a position, into which the selection region 501 is to be pasted, on the thumbnail image 515 as described with reference to FIG. 5C, and displays the selection region 501 on the image data displayed on the entire region of the touchscreen 133 at the same position as that on the thumbnail image 515.

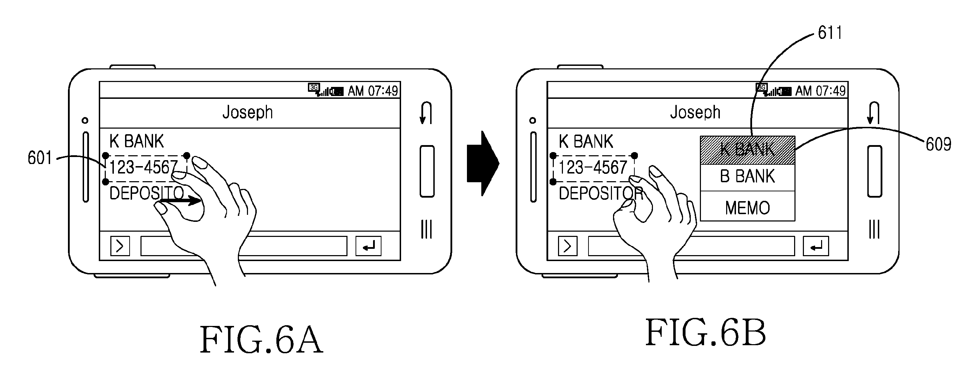

FIGS. 6A and 6B illustrate example operations for moving selected data in an electronic device according to this disclosure.

According to various embodiments, the electronic device 100 selects and copies at least a portion of data with respect to various data including image data and displays the portion in another program.

Referring to FIG. 6A, the electronic device 100 determines at least a portion of data configured by characters of a received message as a selection region 601. The electronic device 100 selects and copies the determined selection region 601 according to a predetermined operation. The electronic device 100 identifies a data type of the selection region 501 through a database stored in the memory 110 when a predetermined switching gesture is detected. According to an embodiment, when data "123-4567" of the selection region 601 has a pattern of a bank account number for K bank, a program associated with K bank is determined to have a high priority in a list of relevant programs 609.

Referring to FIG. 6B, the electronic device 100 performs an operation based on the selected programs and the data type of the selection region 601. According to an embodiment, when an online-banking program 611 provided by K bank is selected the electronic device 100 displays a remittance screen of the online-banking program 611 on the touchscreen 133 and inserts data "123-4567" of the selection region 601 into a window for a remittance bank account number.

According to various embodiments, the selection region 601 including characters which is selected and copied is not limited to a bank account number, and can be various character data having a preset pattern, such as a telephone number, an email address, a date, or an authentication number (such as a shopping mall event number).

According to an embodiment, when the selection region 601 includes a phone number, the electronic device 100 determines priorities of relevant programs including one or more relevant programs associated with the phone number, such as a phone call program or a text message transmitting/receiving program, and configures a list of relevant programs. When the message transmitting/receiving program is selected, the electronic device 100 displays phone number data of the selection region 601 on a receiver input region.

According to an embodiment, when the selection region 601 includes an email address, the electronic device 100 determines priorities of relevant programs including one or more relevant programs associated with the email address, such as an email transmitting/receiving program or a mailing list program, and configures a list of relevant programs. When the email transmitting/receiving program is selected, the electronic device 100 displays email address data of the selection region 601 on the receiver input region.

According to an embodiment, when the selection region 601 includes data including date information, the electronic device 100 determines priorities of relevant programs including one or more relevant programs associated with the date information, such as a schedule management program or a calendar program, and configure a list of relevant programs. When the schedule management program is selected, the electronic device 100 displays a schedule corresponding to date information of the selection region 601.

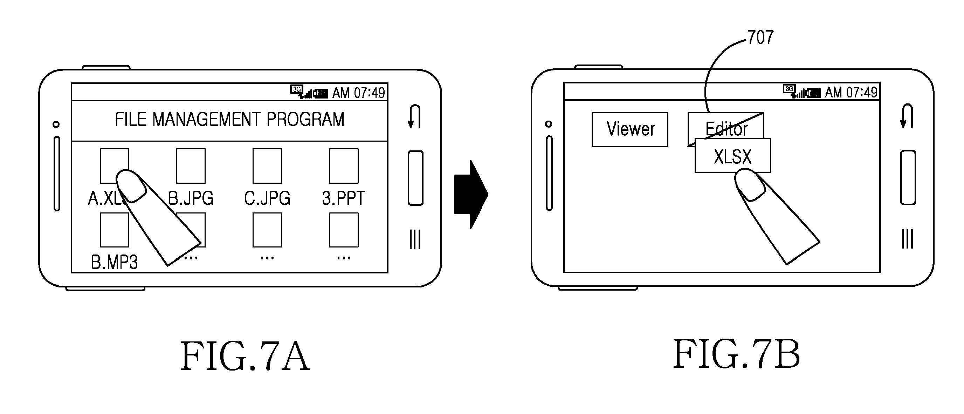

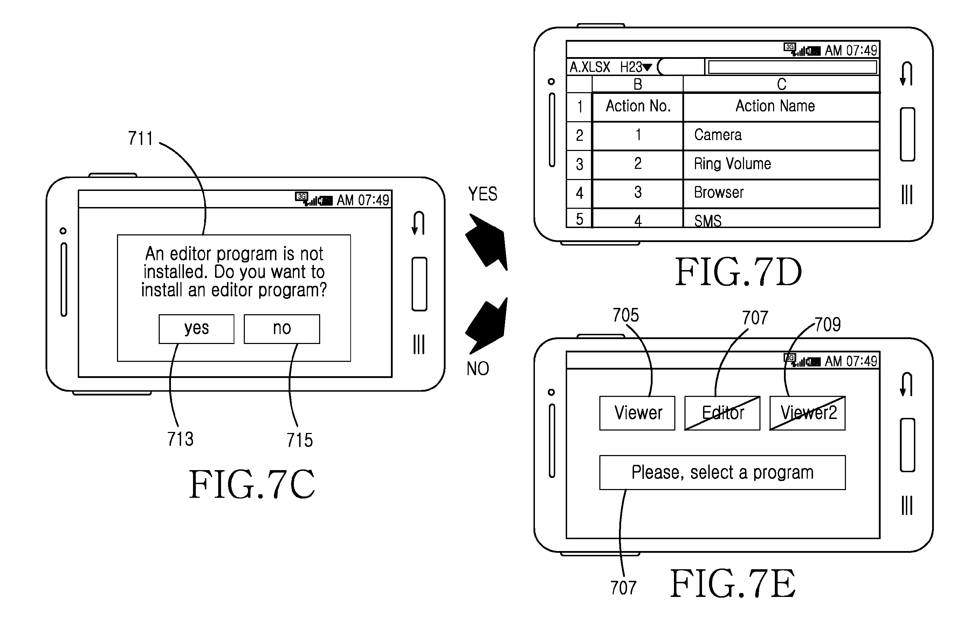

FIGS. 7A, 7B, 7C, 7D, and 7E illustrate example operations for moving selected data in an electronic device according to this disclosure.

According to various embodiments, the electronic device 100 determines data acquired through a data management program as a selection region. The electronic device 100 displays a program, which is not installed in the electronic device, as a relevant program. When the program which is not installed, is selected, the electronic device installs the program according to whether to install the program.

Embodiments of the present disclosure will be described below with reference to FIGS. 7A and 7B.

Referring to FIG. 7A, the electronic device 100 selects displayed data "A.xlsx" through the data management program and detects an input of a predetermined switching gesture.

Referring to FIG. 7B, a relevant program is not limited to a program installed in the electronic device 100, and can include a program which is not installed in the electronic device 100. According to an embodiment, the electronic device 100 displays information about one or more programs which are not installed based on information about download ranks of the relevant programs and information about recommended programs, which are acquired through network communication.

According to an embodiment, the electronic device 100 displays information about a "viewer" program which is installed in the electronic device 100 and information about an "Editor" program which is not installed in the electronic device 100 as the relevant programs associated with the selected data "A.xlsx". The electronic device 100 performs an operation for attaching the selected data "A.xlsx" into the "Editor" program which is not installed in the electronic device 100.

Embodiments of the present disclosure will be described below with reference to FIGS. 7C, 7D, and 7E.

Referring to FIG. 7C, the electronic device 100 displays a notification window 711 for determining whether to installing the "Editor" program when detecting the operation for attaching the selected data "A.xlsx" into the "Editor" program which is not installed in the electronic device 100.

Referring to FIG. 7D, the electronic device 100 determines (713) installation of the "Editor" program. The electronic device 100 installs the "Editor" program and open data "A.xlsx" by executing the installed "Editor" program.

Referring to FIG. 7E, the electronic device 100 determines (715) that the electronic device 100 does not install the "Editor" program. The electronic device 100 displays a program associated with data "A.xlsx" again and releases display of a displayed program or display a new program, such as a "Viewer 2" (709) program by performing setting again. The electronic device 100 also displays a message 707 for guiding selection of the new program.

According to various embodiments, the electronic device 100 is not limited to display of the relevant program associated with selected data and can further include an operation for executing the relevant program and performing an operation in the relevant program. In order to determine an operation to be performed in the relevant program, the electronic device 100 can determine the operation to be performed based on information about an operation which had been performed at least one time, an operation set in the memory 110, state information of the electronic device 100, position information of the electronic device 100, time information of the electronic device.

According to an embodiment, when the selection region 601 is audio data and an earphone is connected to the electronic device, the electronic device 100 determines priorities of one or more relevant programs including one or more programs associated with the audio data, such as an audio playback program or a program for performing output to the earphone through network communication, and configure a list of the relevant programs. When the audio playback program and playback for output to the earphone are selected, the audio data is played back through the audio playback to be output to the earphone.

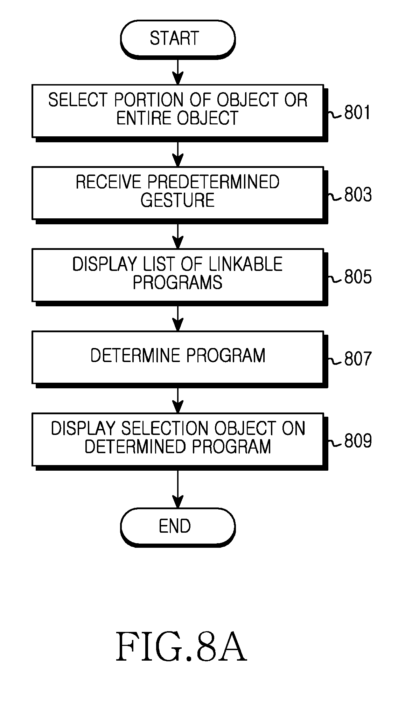

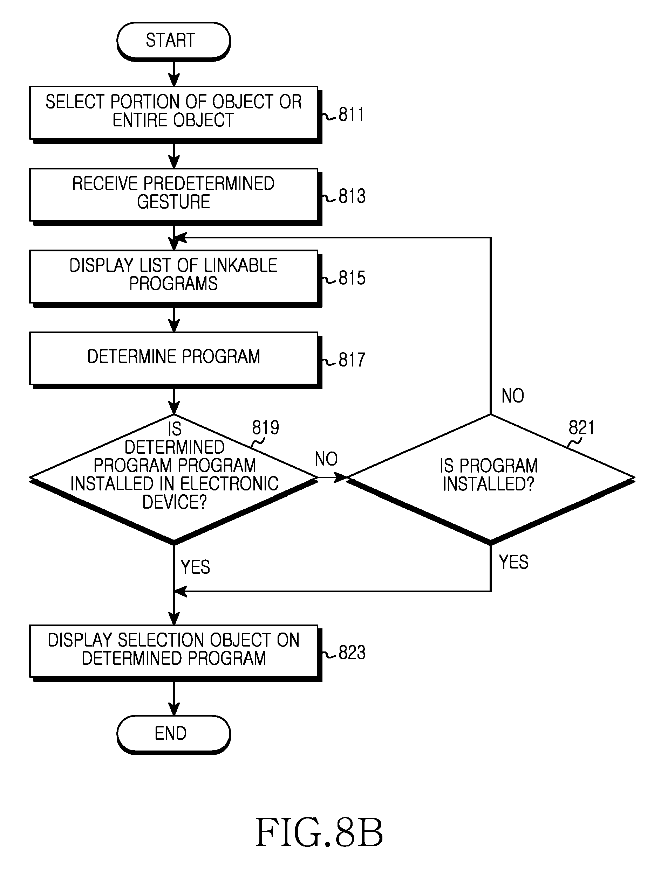

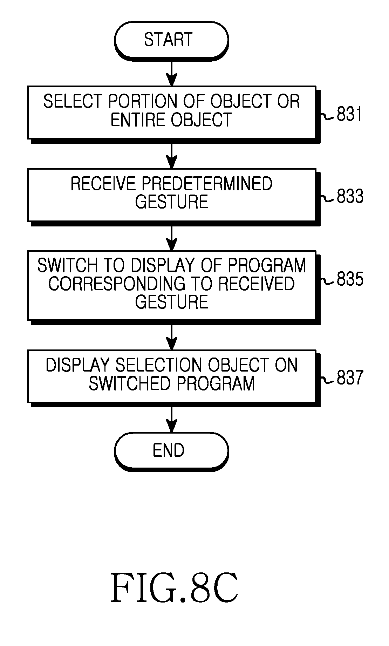

FIGS. 8A, 8B and 8C illustrate example flowcharts of operations for moving a selected object (data) in an electronic device according to this disclosure.

Embodiments of the present disclosure will be described below with reference to FIG. 8A.

The electronic device 100 selects at least a portion of an object (data) displayed on the touchscreen 133, detects a predetermined switching gesture, displays a list of programs connectable to the selected object, selects a program, and displays the selected object in the selected program.

In operation 801, the electronic device 100 determines at least a portion of data displayed on the electronic device as a selection region.

According to various embodiments, the electronic device 100 selects and copy a region corresponding to at least the portion of the object selected through the touchscreen 133. The electronic device 100 determines the selection region 207 from image information displayed on the touchscreen 133 through an input tool. The electronic device 100 performs an operation for selecting and copying the selection region 207, which is determined, through the input tool. The operation for selecting and copying the selection region through the input tool is an operation for touching the determined selection region 207 through the input tool. The determined selection region 207 can be data displayed on the touchscreen 133 of the electronic device or can be data linked to the selection region 207 and stored in the memory 110.

In operation 803, the electronic device 100 receives a switching gesture for switching from display of a program displayed on the touchscreen 133 to display of one or more other programs.

According to various embodiments, an input tool for selecting and copying the selection region is determined as a first input tool and an input tool for inputting a switching gesture is determined as a second input tool. The first input tool is an input tool discriminable from the second input tool set in the electronic device 100.

The electronic device 100 receives a determined switching gesture through the second input tool in a state where the selection region is selected and copied through the first input tool and performs an operation corresponding to the input gesture. The predetermined gesture can be a scrolling operation for touching (211) a certain region of the touchscreen 133, performing a drag operation in a horizontal direction in a state where the touch is maintained, and releasing the touch. According to various embodiments, an operation for detecting the predetermined switching gesture includes one or more of an operation for detecting a plurality of times of touch operations having a pattern, an operation for detecting a pinch-to-zoom operation, an operation for detecting an operation for tabbing a left or right portion of the electronic device 100, an operation for detecting the movement of an eye, an operation for detecting the movement of a user's head, an operation for detecting a proximity touch, an operation for detecting a gesture in space, and an operation for detecting an operation for scrolling a touch input device outside the electronic device 100, in addition to an operation for detecting the scrolling operation.

In operation 805, the electronic device 100 displays a list of programs associated with (or linkable to) the selection region according to the received switching gesture.

The list of programs linkable to or associated with the selection region in the electronic device 100 may be configured to include one or more of a program for playing the selection region (multimedia data) back, a program for editing the selection region, a program for displaying the selection region, a program for processing the data type of the selection region, and a program recommended by information received via network communication. Upon determination of a relevant program, the electronic device 100 determines a program which is not installed in the electronic device 100, and when the program which is not installed in the electronic device 100 is determined, install the program.

According to various embodiments, when the switching gesture is received, the electronic device 100 performs an operation for switching display of programs according to the gesture. The electronic device 100 uses a method for performing a slide method (or a method for performing a scroll operation) as a method for switching display of programs. The slide method can be a method for sequentially displaying programs on the touchscreen based on priorities of programs of the list according to repetitive performance of the gesture. According to various embodiments, the electronic device 100 displays programs identically or similarly to the method described with reference to FIGS. 2A, 2B, 2C, and 2D.

According to various embodiments, when the switching gesture is received, the electronic device 100 performs an operation for switching between display of programs according to the gesture. The electronic device 100 displays a switched program on a certain region of the touchscreen 133. According to an embodiment, the certain region of the touchscreen 133 is configured by a program switching region on which the switched program is displayed. The electronic device 100 uses a method for performing a slide method (or a method for performing a scroll operation) as a method for switching the switched program on the program switching region. The electronic device 100 can sequentially display programs on the touchscreen based on priorities of programs of the list according to repetitive performance of the gesture. The electronic device 100 can display programs identically or similarly to the method described with reference to FIGS. 3A, 3B, 3C, 3D, 3E, 3D, 3E, 3F, 3G, 3H, and 3I.

According to various embodiments, when the switching gesture is input, the electronic device 100 performs an operation for switching between displaying of programs according to the gesture. The electronic device 100 displays a relevant program on a certain region of the touchscreen 133. The relevant program can be displayed by using a shortcut of the relevant program or an icon linked to the relevant program. The electronic device 100 uses a method for arranging icons or shortcuts based on priorities as a method for displaying relevant programs on a certain region of the touchscreen 133. The electronic device 100 displays a program using a method identical or similar to the method described with reference to FIGS. 4A, 4B, 4C, 4D, and 4E.

According to various embodiments, when the switching gesture is input, the electronic device 100 performs an operation for switching between display of programs according to the gesture. The electronic device 100 displays a thumbnail image of a switched program on a certain region of the touchscreen 100. According to an embodiment, the coordinates of thumbnails which are displayed on the touchscreen can be acquired. According to an embodiment, when the selection region is pasted into a certain position on the thumbnail image, the selection region is pasted into a position of a program corresponding to the selected position on the thumbnail image. The electronic device 100 uses a method for arranging icons or shortcuts based on priorities as a method for displaying relevant programs on a certain region of the touchscreen 133. The electronic device 100 displays a program using a method identical or similar to the method described with reference to FIGS. 5A, 5B, 5C, and 5D.

In operation 807, the electronic device 100 displays a selected program on the touchscreen 133. According to various embodiments, the electronic device 100 selects a program, into which the selection region is to be pasted, from a list of relevant programs which is displayed thereon using various methods.

According to various embodiments, when the relevant programs are displayed according to a slide operation, the electronic device 100 determines a program, into which the selection region is to be pasted, when an input tool is released from a state of selecting and copying the selection region at a certain position corresponding to one of programs displayed on the touchscreen.

According to various embodiments, when the relevant programs are displayed using icons, shortcuts, or thumbnail images, the electronic device 100 selects a program, into which the selection region is to be pasted, from the icons, the shortcuts, or the thumbnail images displayed on the touchscreen 133. The electronic device 100 determines the program when the input tool is released from a state of selecting and copying the selection region at a position into which the selection region of the touchscreen 133 is to be pasted.

In operation 809, the electronic device 100 pastes the selection region into a certain position on the selected program. According to various embodiments, the electronic device 100 pastes the selection region into a position which is selected by the input tool for selecting and copying the selection region and displays the selection region on the touchscreen 133.

According to various embodiments, when the selection region is multimedia data including moving image data and audio information, the electronic device 100 displays the selection region according to a selected icon, shortcut, or thumbnail image. When a selected program is a program for playing back the multimedia data, the electronic device 100 plays back data corresponding to the selection region according to information included in the icon, shortcut or thumbnail image. When the selected program is a program for editing data, the electronic device 100 provides the selection region so as to edit data corresponding to the selection region.

The electronic device 100 ends the embodiment of FIG. 8A when operation 809 is performed.

Embodiments of the present disclosure will be described below with reference to FIG. 8B.

The electronic device 100 includes information about a program which is not installed in the electronic device, as a program associated with a selection region. In the embodiment of FIG. 8B, operation 811 can be performed identically or similarly to operation 801 of FIG. 8A, operation 813 can be performed identically or similarly to operation 803 of FIG. 8A, and operation 823 can be performed identically or similarly to operation 809 of FIG. 8A. In the embodiment of FIG. 8B, operation 815 to operation 821 of FIG. 8B can be implemented to process the selection region when a program which is not installed in the electronic device 100 is selected.

In operation 815, the electronic device 100 displays a list of relevant programs according to a switching gesture. According to various embodiments, the electronic device 100 displays the relevant programs including the program which is not installed. According to an embodiment, the electronic device 100 displays information about one or more programs which are not installed based on information about download ranks of the relevant programs and information about recommended programs, which are acquired through network communication. According to various embodiments, the electronic device 100 displays a list of determined programs similarly to operation 805 of FIG. 8A.

In operation 817, the electronic device 100 displays a selected program on the touchscreen 133. According to various embodiments, the electronic device 100 selects a program, to which the selection region is to be input, from a list of relevant programs which is displayed thereon using various methods.

According to various embodiments, when the relevant programs are displayed according to a slide operation, the electronic device 100 determines a program, into which the selection region is to be pasted, when an input tool is released from a state of selecting and copying the selection region at a certain position corresponding to one of programs displayed on the touchscreen.

According to various embodiments, when the relevant programs are displayed using icons, shortcuts, or thumbnail images, the electronic device 100 selects a program, into which the selection region is to be pasted, from the icons, the shortcuts, or the thumbnail images displayed on the touchscreen 133. The electronic device 100 determines the program when the input tool is released from a state of selecting and copying the selection region at a position into which the selection region of the touchscreen 133 is to be pasted.

In operation 819, the electronic device 100 determines whether the selected program is a program which is installed in the electronic device 100 or a program which is not installed in the electronic device 100. When the selected program is a program which is installed in the electronic device 100, the electronic device 100 performs operation 823. When the selected program is a program which is not installed in the electronic device 100, the electronic device 100 performs operation 821.

In operation 821, the electronic device 100 determines whether to install the selected program when the selected program is a program which is not installed in the electronic device 100. When the electronic device 100 determines to install the selected program, the electronic device 100 receives the selected program through a network communication path (other electronic devices such as a server or an on-line store for program purchase) for downloading the selected program. The electronic device 100 installs a received program.

When the selected program is installed, the electronic device 100 performs operation 823. When the selected program is determined not to be installed, the electronic device 100 performs operation 815.

In operation 823, the electronic device 100 pastes the selection region into a certain position on the selected program. According to various embodiments, the electronic device 100 pastes the selection region into a position which is selected by the input tool for selecting and copying the selection region and display the selection region on the touchscreen 133.

According to various embodiments, when the selection region is multimedia data including moving image data and audio information, the electronic device 100 displays the selection region according to a selected icon, shortcut, or thumbnail image. When a selected program is a program for playing back the multimedia data, the electronic device 100 plays back data corresponding to the selection region according to information included in the icon, shortcut or thumbnail image. When the selected program is a program for editing data, the electronic device 100 provides the selection region so as to edit data corresponding to the selection region.

The electronic device 100 end the embodiment of FIG. 8B when operation 823 is performed.

An embodiment of the present disclosure will be described below with reference to FIG. 8C.

The electronic device 100 selects at least a portion of an object (data) displayed on the touchscreen 133, receives an input of a predetermined switching gesture, determines a program corresponding to the input switching gesture, and displays the selected object in the selected program.

In the embodiment of FIG. 8C, operation 831 can be performed identically or similarly to operation 801 of FIG. 8A, and operation 833 can be performed identically or similarly to operation 803 of FIG. 8A. In the embodiment of FIG. 8C, operation 835 and operation 837 of FIG. 8C can be implemented to display the selection region on a certain region, on which the determined program is displayed, according to the received gesture.

In operation 835, the electronic device 100 enables a program corresponding to the input switching gesture to be executed. The electronic device 100 determines the program corresponding to the switching gesture based on at least one of the switching gesture received in operation 833, an input tool used to determine the selection region in operation 831, a type (such as a data type such as image data, program data, or multimedia data) of the selection region selected in operation 831, and an input tool for inputting the switching gesture in operation 833. The electronic device 100 detects one or more input tools and the switching gesture and determines a designated program according to the input tool and the gesture which are detected by the electronic device. When the predetermined program is identified, the electronic device 100 switches from a current program including the selection program displayed on the touchscreen 133 to the program determined according to the switching gesture and displays the selection region acquired from the current program on the switched program.

In operation 837, the electronic device 100 determines a position, into which the selection region is to be pasted, on the switched program and paste the selection region into the position. According to various embodiments, the electronic device 100 determines a position into which the selection region is to be pasted by moving the selection region, for example, through dragging using an input tool for selecting and copying the selection region and display the selection region at the determined position on the program displayed on the touchscreen through a predetermined operation, such as an operation for releasing the input tool from a touched state.

According to various embodiments, when the selection region is multimedia data including moving image data and audio information, the electronic device 100 displays the selection region according to a selected icon, shortcut, or thumbnail image. When the switched program is a program for playing back the multimedia data, the electronic device 100 plays back data corresponding to the selection region according to information included in the icon, shortcut or thumbnail image. When the switched program is a program for editing data, the electronic device 100 provides the selection region so as to edit data corresponding to the selection region.

The electronic device 100 ends the embodiment of FIG. 8C after operation 837 is performed.

According to various embodiments of the present disclosure, a method for operating an electronic device includes selecting data of at least a region associated with a first program displayed on the touchscreen, detecting a switching gesture; displaying a second program corresponding to the switching gesture, and pasting the data into the second program displayed.

According to various embodiments of the present disclosure, a method for operating an electronic device includes, selecting and copying data displayed on a touchscreen; detecting a switching gesture, displaying a program selected by the switching gesture, and pasting the data into the program.

According to various embodiments, a method for processing data in an electronic device includes providing a first program through a display functionally connected to the electronic device, acquiring a first input for selecting at least a portion associated with the first program, acquiring a second input for transferring information corresponding to the at least a portion, based on the first input, determining a second program which receives the information corresponding to the at least a portion based on predetermined information, based on the second input, and displaying information corresponding to the at least a portion on the second program based on the determination.

According to various embodiments, the predetermined information can include information about a combination of one or more of a history of at least one program used in the electronic device, a program residing in the electronic device, a type of the data, content of the data, and a selection tool which selects the data.

According to various embodiments, displaying the information can include displaying the data at a designated position of the second program or a position determined by a user's input.

According to various embodiments, determining the second program can include displaying one or more programs corresponding to the second input, and selecting one or more of the one or more programs. According to various embodiments, displaying the one or more programs includes displaying the one or more programs sequentially. According to various embodiments, displaying the one or more programs sequentially includes displaying the one or more programs sequentially according to an additional input. According to various embodiments, the additional input can be acquired by repetitive performance of the second input. According to various embodiments, displaying the one or more programs sequentially can include displaying the one or more programs sequentially according to predetermined priorities.

According to various embodiments, the information corresponding to the at least a portion includes at least one of text data, image data, multimedia data, text data corresponding to the image data, and text data corresponding to the multimedia data.

According to various embodiments, the first input and the second input includes at least one of a touch, a touch-drag, a touch-drag-release, and an indirect touch which are performed on a touchscreen using one or more input tools when the display is the touchscreen.

According to various embodiments, the second input includes a touch at a certain position on the touchscreen and a drag having a distance equal to or longer than a predetermined distance. According to various embodiments, the selection can be to copy or cut the data. According to various embodiments, the determined second program can be a program downloaded through network communication.

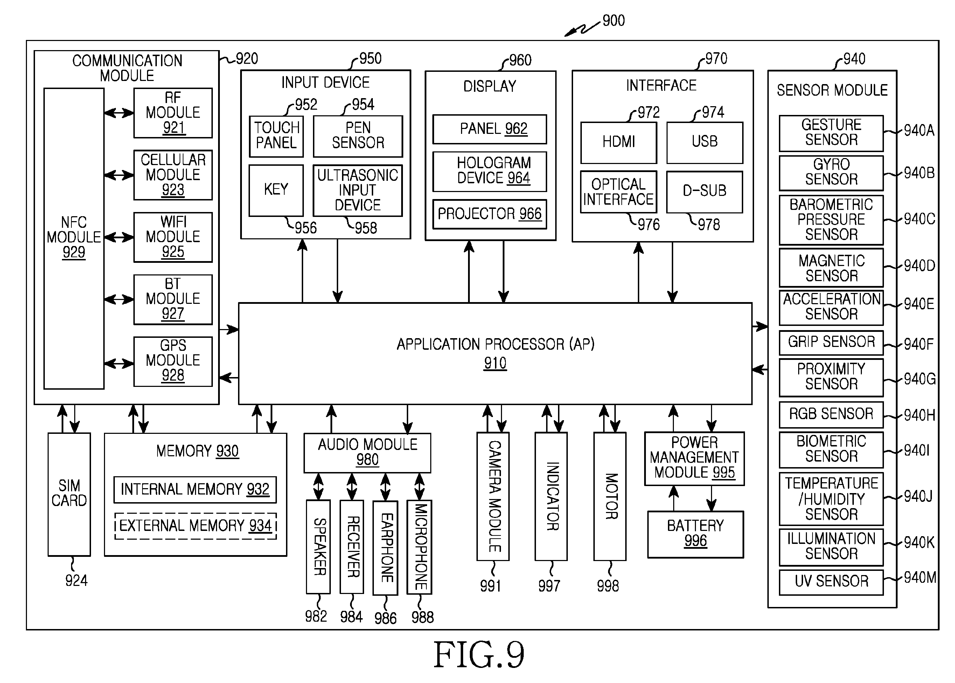

FIG. 9 illustrates an example block diagram of hardware 900 according to this disclosure. The hardware 900 constitutes the whole or a part of the electronic device 900 illustrated in FIG. 1, for example. Referring to FIG. 9, the hardware 900 includes at least one processor 910, a subscriber identification module (SIM) card 914, a memory 920, a communication module 930, a sensor module 940, a user input module 950, a display module 960, an interface 970, an audio codec 980, a camera module 991, a power management module 995, a battery 996, an indicator 997, or a motor 998.

The processor 910 (such as the processor 120) includes at least one application processor (AP) 911 or at least one communication processor (CP) 913. The processor 910 can be the processor 120 illustrated in FIG. 1 for example. Although the AP 911 and the CP 913 are illustrated as being included in the processor 910 in FIG. 9, the AP 911 and the CP 913 can be included in different IC packages respectively. According to an embodiment, the AP 911 and the CP 913 can be included in one IC package.

The AP 911 executes an operating system and an application program to control a plurality of hardware or software elements connected to the AP 911 and performs data processing and data operation on various types of data including multimedia data. The AP 911 can be implemented using, for example, a system on chip (SoC). According to an embodiment, the processor 910 further includes a graphics processing unit (GPU).

The CP 913 manages data links for communication between an electronic device (such as the electronic device 100) including the hardware 900 and other electronic devices connected to the electronic device through networks, and convert communication protocols. The CP 913 can be implemented using, for example, an SoC. According to an embodiment, the CP 913 performs at least one of multimedia control functions. The CP 913 performs identification and authentication of terminals within a communication network by using, for example, a subscriber identification module (for example, the SIM card 914). The CP 913 provides services, such as a voice call, a video call, a text message, or packet data, to a user.

In addition, the CP 913 controls the data transmission and reception of the communication module 930. Although the elements, such as the CP 913, the power management module 995, or the memory 920 are illustrated as being provided separately from the AP 911 in FIG. 9, the AP 911 is implemented to include at least one (such as the CP 913) of the above-described elements.

According to an embodiment, the AP 911 or the CP 913 loads a command or data received from or at least one of a nonvolatile memory and other elements, which are connected to the AP 911 or the CP 913, into a volatile memory and processes the same. In addition, the AP 911 or the CP 913 stores data received from or generated by at least one of other elements in the nonvolatile memory.

The SIM card 914 can be a card implementing a subscriber identification module, or can be inserted into a slot formed at a specific position of the electronic device. The SIM card 914 can include unique identification information (such as integrated circuit card identifier (ICCID)) or subscriber information (such as international mobile subscriber identity (IMSI)).

The memory 920 includes an internal memory 922 or an external memory 924. The memory 920 can be, for example, the memory 110 illustrated in FIG. 1. The internal memory 922 can include, for example, at least one of a volatile memory (for example, a dynamic RAM (DRAM), a static RAM (SRAM), or a synchronous dynamic RAM (SDRAM)) or a non-volatile memory (such as a one-time programmable ROM (OTPROM), a programmable ROM (PROM), an erasable and programmable ROM (EPROM), an electrically erasable and programmable ROM (EEPROM), a mask ROM, a flash ROM, a NAND flash memory, a NOR flash memory). According to an embodiment, the internal memory 922 may have a solid state drive (SSD) type. The external memory 924 can further include a flash drive, for example, a compact flash (CF) card, a secure digital (SD) card, a micro secure digital (Micro-SD) card, a mini secure digital (Mini-SD) card, an extreme digital (xD) card, or a memory stick.

The communication module 930 includes a wireless communication module 931 or a radio frequency (RF) module 934. The communication module 930 can be, for example, the communication module 170 illustrated in FIG. 1. The wireless communication module 931 includes, for example, a WiFi module 933, a Bluetooth (BT) module 935, a global positioning system (GPS) module 937, or a near-field communication (NFC) module 939. For example, the wireless communication module 931 may provide a wireless communication function by using a radio frequency. Additionally or alternatively, the wireless communication module 931 includes a network interface (such as a LAN card) or a modem which connects the hardware 900 to a network (such as Internet, LAN (local area network), WAN (wire area network), a telecommunication network, a cellular network, a satellite network or POTS (plain old telephone service).

The RF module 934 performs transmission and reception of data, for example, transmission and reception of RF signals or requested electronic signals. The RF module 934 includes, for example, a transceiver, a power amp module (PAM), a frequency filter, or a low noise amplifier (LNA). The RF module 934 further includes a component for transmitting and receiving electromagnetic waves in free space for wireless communication, for example, a conductor or a conductive line.

The sensor module 940 includes at least one of, for example, a gesture sensor 940A, a gyro sensor 940B, a barometer 940C, a magnetic sensor 940D, an acceleration sensor 940E, a grip sensor 940F, a proximity sensor 940G, a RGB (red-green-blue) sensor 940H, a biometric sensor 940I, a temperature/humidity sensor 940J, an illuminance sensor 940K, and an ultra violet (UV) sensor 940M. The sensor module 940 measures a physical amount or detect an operating state of the electronic device, and converts measured or detected information into an electrical signal. Additionally or alternatively, the sensor module 940 includes, for example, an E-nose sensor, an electromyography (EMG) sensor, an electroencephalogram (EEG) sensor, , an electrocardiogram (ECG) sensor or a fingerprint sensor. The sensor module 940 further includes a control circuit for controlling at least one sensor included therein.

The user input module 950 includes a touch panel 952, a (digital) pen sensor 954, a key 956, or an ultrasonic input device 958. The user input module 950 can be, for example, the input/output interface 140 illustrated in FIG. 1. The touch panel 952 recognizes a touch input by using at least one of, for example, a capacitive method, a resistive method, an infrared method, and an ultrasonic method. In addition, the touch panel 952 further includes a controller. In the case of the capacitive method, not only direct touch, but also proximity recognition are possible. The touch panel 952 further includes a tactile layer. In this case, the touch panel 952 provides a tactile response to a user.

The (digital) pen sensor 954 is implemented by using, for example, a method identical or similar to a method for receiving a user's touch input or a separate recognition sheet. For example, a keypad or a touch key is used as the key 956. The ultrasonic input device 958 is a device for detecting a sound wave using a microphone (such as a microphone 988) and identifying data in a terminal, through a pen for generating an ultrasonic signal, to enable wireless recognition. According to an embodiment, the hardware 900 receives a user input from an external device (such as a network, a computer, or a server) connected thereto by using the communication module 930.

The display module 960 includes a panel 962 and a hologram 964. The display module 960 can be, for example, the display module 150 illustrated in FIG. 1. The panel 962 can be, for example, a liquid-crystal display (LCD) panel or an active-matrix organic light-emitting diode (AM-OLED) panel. The panel 962 can be implemented to be, for example, flexible, transparent, or wearable. The panel 962 and the touch panel 952 can be configured as one module. The hologram 964 enables a three-dimensional image to be viewed in space using optical interference. According to an embodiment, the display module 960 further includes a control circuit for controlling the panel 962 or the hologram 964.

The interface 910 includes, for example, a high-definition multimedia interface (HDMI) 912, a universal serial bus (USB) 914, a projector 916, or a D-subminiature (D-sub) 918. Additionally or alternatively, the interface 910 includes a secure digital (SD)/multi-media card (MMC) interface or an infrared data association (IrDA) interface.

The audio codec 980 performs conversion between voice and electrical signals bi-directionally. The audio codec 980 performs conversion of voice information that is input or output through, for example, a speaker 982, a receiver 984, an earphone 986, or the microphone 988.

The camera module 991 is a device for capturing an image and moving images. According to an embodiment, the camera module 191 includes at least one image sensor (such as a front lens or a rear lens), an image signal processor (ISP), or a flash LED.

The power management module 995 manages power of the hardware 900. The power management module 995 includes, for example, a power management integrated circuit (PMIC), a charger integrated circuit (charger IC), or a battery fuel gauge.

The PMIC is mounted on, for example, an integrated circuit or an SoC semiconductor. A charging method includes a wired charging method and a wireless charging method. The charger IC charges a battery and prevents the application of overvoltage or overcurrent from a charger. According to an embodiment, the charger IC includes a charger IC that performs at least one of a wired charging method or a wireless charging method. The wireless charging method includes, for example, a magnetic resonance method, a magnetic induction method, or an electromagnetic wave method. For example, an additional circuit for wireless charging, for example, a coil loop, a resonance circuit, or a rectifier can be included.

The battery fuel gage measures, for example, an amount of power remaining, a voltage, a current, or a temperature of the battery 996 during charging. The battery 996 generates electricity and supply power and can be, for example, a rechargeable battery.

The indicator 997 indicates a specific state of the hardware 900 or an element (such as AP 911) of the hardware 900, for example, a booting state, a message state, or a charging state. The motor 998 converts an electrical signal into mechanical vibration. The MCU 999 controls the sensor module 940.

The hardware 900 includes a processing device (such as a graphics processing unit (GPU)) for supporting mobile TV. The processing device for supporting mobile TV processes standard-compliant media data, such as DMB (digital multimedia broadcasting) data, DVB (digital video broadcasting) data, or media flow data. Each of the above-descried elements of the hardware according to the present disclosure can be configured by one or more components and the name of each element can vary depending on the type of an electronic device. The hardware according to the present disclosure can be configured by including at least one of the above-described elements, and some elements can be omitted from or additional element can be further included in the electronic device. In addition, some of the elements of the hardware according to the present disclosure can be combined into one entity and perform functions of relevant elements before combination.

According to various embodiments of the present disclosure can provide various methods for selecting an object displayed on a touchscreen through one or more input tools and a predetermined gesture, switch between programs and inputs a selected certain region to a selected program.

Various embodiments of the present disclosure can be performed through one or more programs included in the memory 110 of the electronic device 100, be directly controlled by a processor, or be controlled by a data management module which receives commands from the processor.

According to various embodiments, an electronic device includes a display functionally connected to the electronic device, and at least one processor for managing data processing, wherein the electronic device provides a first program through the display, acquires a first input for selecting at least a portion associated with the first program, acquires a second input for transferring information corresponding to the at least a portion, based on the first input, determines a second program which receives the information corresponding to the at least a portion based on predetermined information, based on the second input, and displays information corresponding to the at least a portion on the second program based on the determination.

According to various embodiments, the processor may determine the second program based on a combination of one or more of a history of at least one program used in the electronic device, a program residing in the electronic device, a type of the data, content of the data, and a selection tool which selects the data.

According to various embodiments, the processor can display the data at a designated position of the second program displayed on the display or a position determined by a user's input.

According to various embodiments, the processor displays one or more programs corresponding to the second input and determines one or more of the one or more programs as the first program. According to various embodiments, the processor performs control to display the one or more programs sequentially. According to various embodiments, the processor performs control to display the one or more programs sequentially according to repetitive performance of the second input. According to various embodiments, the processor displays the one or more programs sequentially according to predetermined priorities.

According to various embodiments, the processor displays at least one of text data, image data, multimedia data, text data corresponding to the image data, and text data corresponding to the multimedia data as the information corresponding to the at least a portion.

According to various embodiments, the processor performs control to determine at least one of a touch, a touch-drag, a touch-drag-release, and an indirect touch which are performed on a touchscreen using one or more input tools as the first input and the second input when the display is the touchscreen.

According to various embodiments, the processor determines a touch at a certain position on the touchscreen and a drag having a distance equal to or longer than a predetermined distance as the second input.

According to various embodiments, the processor performs control to select the at least a portion by performing a copy or cut function.

According to various embodiments, the processor performs control to download the determined second program through network communication.

According to various embodiments, a method for operating an electronic device includes designating a text data region or an image data region displayed on a touchscreen, detecting a touch on the region and a drag having a distance equal to or longer than a predetermined distance, displaying a word processing program or an image processing program associated with the text data or the image data, and pasting the text data or the image data into the word processing program or the image processing program which is displayed.

Although a display unit for the electronic device 100 is described as being the touchscreen according to the various embodiments of the present disclosure, the present disclosure is not limited to the electronic device 100 including the touchscreen 133. It is obvious that the various embodiments of the present disclosure is applicable to an electronic device 100 including a display unit functionally connected to the electronic device 100 and various input tools (such as one or more of a keyboard, a mouse, a trackpad, and another pointing device) capable of selecting an object displayed on the display unit.

Various exemplary embodiments for describing the present disclosure can be performed by using one or more programs included in the memory 110 of the electronic device 100, or may be directly controlled by a processor (such as the processor 122). In addition, the exemplary embodiments may also be controlled by using one or more control modules. And the one or more control modules can be controlled by the processor 122.

The term "module" as used herein may refer to a unit including one or a combination of two or more of, for example, hardware, software, and firmware. The "module" may be used interchangeably with, for example, the term "unit", "logic", "logical block", "component", or "circuit". The "module" may be a smallest unit or part of an integrally formed component. The "module" may be a smallest unit or a part thereof which performs one or more functions. The "module" may be implemented mechanically or electronically. For example, the "module" according to the present disclosure may include at least one of an application-specific integrated circuit (ASIC) chip, field programmable gate arrays (FPGA), a programmable-logic device, which perform certain operations that are well known present or later-developed.

According to the various embodiments, at least a part of the apparatus (for example, modules or functions thereof) or the method (for example, operations) according to the present disclosure can be implemented by an instruction stored in a computer-readable storage media as a programming module for example. When an instruction is executed by at least one processor (such as the processor 210), the processor may perform a function corresponding to the instruction. The computer-readable storage media may be, for example, the memory 220. At least a part of the programming module can be implemented (such as executed) by the processor 210 for example. At least a part of the programming module can include, for example, a module, a program, a routine, a set of instruction, or a process which performs one or more functions.

Examples of the computer-readable recording medium include magnetic media such as hard disks, floppy disks and magnetic tapes, optical media such as CD-ROMs and DVDs, magneto-optical media such as floptical disks, and hardware devices such as ROMs, RAMs and flash memories that are especially configured to store and execute program commands (such as the programming module). The program commands includes machine language codes that may be generated by a compiler, and high-level language codes that may be executed by a computer by using an interpreter. The hardware apparatus can be configured to operate as one or more software modules in order to perform operations according to the present disclosure, or visa versa.

The module or programming module according to the present disclosure may include one or more elements among the above-described elements or emit some elements among the above-described elements, or further include another element. The operations performed by the module, programming module, or another element according to the present disclosure may be performed in a sequential manner, a parallel manner, a repetitive manner, or a heuristic manner. Furthermore, some operations may be performed in another order or be omitted, or another operation may be included.

According to various embodiments, a non-transient computer readable storage medium stores one or more programs including instructions that, when executed, causes at least one processor to designate a text data region or an image data region displayed on a touchscreen, detect a touch on the region and a drag having a distance equal to or longer than a predetermined distance, display a word processing program or an image processing program associated with the text data or the image data, and paste the text data or the image data into the word processing program or the image processing program which is displayed in an electronic device.

According to various embodiments, an electronic device comprising:
a display functionally connected to the electronic device; and at least one processor configured to manage data processing,
wherein the at least one processor is configure to provide a first program through the display, acquire a first input for selecting at least a portion associate d with the first program, acquire a second input for transferring information corr esponding to the at least a portion, based on the first input, determine a second program which receives the information corresponding to the at least a portion b ased on predetermined information, based on the second input, and display infor mation corresponding to the at least a portion on the second program based on t he determination. Wherein the electronic device is configured to determine the se cond program based on a combination of one or more of a history of at least one program used in the electronic device, a program residing in the electronic device, a type of the data, content of the data, and a selection tool which selects the data. Wherein the electronic device is configure to display the data at a designated position of the second program displayed on the display or a position determined by a user's input. Wherein the electronic device is configured to display one or more programs corresponding to the second input and determine one or more of the one or more programs as the first program. Wherein the electronic device is configured to perform control to display the one or more programs sequentially. Wherein the electronic device is configured to perform control to display the one or more programs sequentially according to repetitive performance of the second input. Wherein the module is configured to display the one or more programs sequentially according to predetermined priorities. Wherein the electronic device is configured to display at least one of text data, image data, multimedia data, text data corresponding to the image data, and text data corresponding to the multimedia data as the information corresponding to the at least a portion. Wherein the electronic device is configured to perform control to determine at least one of a touch, a touch-drag, a touch-drag-release, and an indirect touch which are performed on a touchscreen using one or more input tools as the first input and the second input when the display is the touchscreen. Wherein the electronic device is configured to determine a touch at a certain position on the touchscreen and a drag having a distance equal to or longer than a predetermined distance as the second input. Wherein the electronic device is configured to perform control to select the at least a portion by performing a copy or cut function. Wherein the electronic device is configured to perform control to download the determined second program through network communication.

According to various embodiments, a non-transient computer readable storage medium storing one or more programs comprising instructions that, when executed, causes at least one processor to designate a text data region or an image data region displayed on a touchscreen, detect a touch on the region and a drag having a distance equal to or longer than a predetermined distance, display a word processing program or an image processing program associated with the text data or the image data, and paste the text data or the image data into the word processing program or the image processing program which is displayed, in an electronic device.

While the present disclosure has been shown and described with reference to certain preferred embodiments thereof, it will be understood by those skilled in the art that various changes in form and details may be made therein without departing from the spirit and scope of the present disclosure as defined by the appended claims. Therefore, the scope of the present disclosure is defined not by the detailed description of the present disclosure but by the appended claims, and all differences within the scope will be construed as being included in the present disclosure.

## Claims

1. A method in an electronic device, the method comprising:
providing a first program through a display;
acquiring a first input for selecting at least a portion associated with the first program;
acquiring a second input for transferring information corresponding to the at least a portion, based on the first input;
determining a second program which receives the information corresponding to the at least a portion based on predetermined information, based on the second input; and
displaying information corresponding to at least the portion on the second program based on the determination.

2. The method of claim 1, wherein the predetermined information includes information about a combination of one or more of a history of at least one program used in the electronic device, a program residing in the electronic device, a type of the data, content of the data, and a selection tool which selects the data.

3. The method of claim 1, wherein displaying the information comprises displaying the data at a designated position of the second program or a position determined by a user's input.

4. The method of claim 1, wherein determining the second program comprises:
displaying one or more programs corresponding to the second input; and
selecting one or more of the one or more programs.

5. The method of claim 4, wherein displaying the one or more programs comprises displaying the one or more programs sequentially.

6. The method of claim 5, wherein displaying the one or more programs sequentially comprises displaying the one or more programs sequentially according to an additional input.

7. The method of claim 6, wherein the additional input is acquired by repetitive performance of the second input.

8. The method of claim 5, wherein displaying the one or more programs sequentially comprises displaying the one or more programs sequentially according to predetermined priorities.

9. The method of claim 1, wherein the information corresponding to the at least a portion includes at least one of text data, image data, multimedia data, text data corresponding to the image data, and text data corresponding to the multimedia data.

10. The method of claim 1, wherein the first input and the second input include at least one of a touch, a touch-drag, a touch-drag-release, and an indirect touch which are performed on a touchscreen using one or more input tools when the display is the touchscreen.

11. The method of claim 1, wherein the second input includes a touch at a certain position on the touchscreen and a drag having a distance equal to or longer than a predetermined distance.

12. The method of claim 1, wherein the selection is to copy or cut the data.

13. The method of claim 1, wherein the determined second program is a program downloaded through network communication.

14. An electronic device comprising a processor wherein the processor performs the method of claim 1 to claim 13.
